# EUROPÄISCHE PATENTSCHRIFT

(11) **EP 4 051 007 B1**
(45) Veröffentlichungstag und Bekanntmachung des Hinweises auf die Patenterteilung: **22.01.2025**
(21) Anmeldenummer: 20712459.5
(22) Anmeldetag: 06.03.2020
(51) Int. Cl.: A22C 21/04

(54) **VORRICHTUNG UND VERFAHREN ZUM BRÜHEN VON GESCHLACHTETEM GEFLÜGEL**
DEVICE AND METHOD FOR SCALDING SLAUGHTERED POULTRY
DISPOSITIF ET PROCÉDÉ D'ÉCHAUDAGE DE VOLAILLES ABATTUES

(43) Veröffentlichungstag der Anmeldung: 07.09.2022
(73) Patentinhaber: BAADER Food Systems Denmark A/S, 8380 Trige (DK)
(72) Erfinder: JENSEN, Jonas, 8380 Trige (DK); NIELSEN, Karsten, 8380 Trige (DK); THORUP, Per, 8380 Trige (DK)
(74) Vertreter: Stork Bamberger Patentanwälte PartmbB
(86) Internationale Anmeldenummer: PCT/EP2020/056022
(87) Internationale Veröffentlichungsnummer: WO 2021/175438

(56) Entgegenhaltungen:
- US-A- 2 667 661
- US-A- 4 947 518
- US-A- 4 961 248

## Beschreibung

Die Erfindung betrifft eine Vorrichtung, ausgebildet und eingerichtet zum Brühen von geschlachtetem Geflügel, umfassend einen länglichen, seitlich umlaufend mit Seitenwänden und Stirnwänden und nach unten mit einer Bodenwand geschlossenen und nach oben offenen Brühtank zum Aufnehmen und zum Halten eines flüssigen Brühmediums, ein oberhalb des Brühtanks angeordnetes Transportmittel zum hängenden Transportieren des Geflügels innerhalb des Brühtanks entlang eines aus mehreren Brühkanalabschnitten gebildeten Brühkanals von einem Eingabebereich zu einem Ausgabebereich, wobei innerhalb des Brühtanks mindestens zwei Transportstrecken für das Geflügel jeweils von einer Stirnseite des Brühtanks zur gegenüberliegenden Stirnseite des Brühtanks ausgebildet sind und die Transportstrecken mittels gekrümmter Verbindungsstrecken zur 180-Grad-Umlenkung miteinander verbunden sind, wobei jede Transportstrecke und jede Verbindungsstrecke durch zwei quer zur Transportrichtung beabstandet zueinander angeordnete Trennwände und eine Bodenwand zur Bildung nach oben offener linearer Brühkanalabschnitte und nach oben offener gekrümmter Brühkanalabschnitte begrenzt ist, wobei Trennwände benachbarter Brühkanalabschnitte sowie Trennwände, die benachbart zu Außenwänden des Brühtanks liegen, beabstandet zueinander zur Bildung eines Freiraums für das Brühmedium angeordnet sind, wobei mindestens den Freiräumen benachbarter Brühkanalabschnitte Mittel zum Zuführen und/oder Erwärmen des Brühmediums zugeordnet sind, und wobei unterhalb mindestens von Teilen des Brühkanals, nämlich mindestens zwischen den Bodenwänden der linearen Brühkanalabschnitte und der Bodenwand des Brühtanks ein Aufnahmeraum für Brühmedium gebildet ist, der zusammen mit den Freiräumen eine gemeinsame Kammer bildet, der mindestens ein Verwirbelungskörper zur Erzeugung von Verwirbelung und/oder Strömung des Brühmediums im Brühtank zugeordnet ist.

Die Erfindung betrifft weiterhin ein Verfahren zum Brühen von geschlachtetem Geflügel, umfassend die Schritte: Transportieren des Geflügels an den Füßen hängend durch einen mit flüssigem Brühmedium mindestens teilweise gefüllten Brühtank mittels eines Transportmittels in Transportrichtung T von einem Eingabebereich zu einem Ausgabebereich entlang eines lineare und gekrümmte Brühkanalabschnitte umfassenden Brühkanals, Erwärmen und/oder Zuführen des Brühmediums durch Mittel zum Erwärmen und/oder Zuführen des Brühmediums, und Verwirbeln des Brühmediums innerhalb des Brühtanks mittels mindestens eines Verwirbelungskörpers, wodurch das Brühmedium aus einem Aufnahmeraum unterhalb des Brühkanals abschnittsweise von oben zurück in den Brühkanal geleitet wird.

Solche Vorrichtungen und Verfahren kommen in der geflügelverarbeitenden Industrie zum Einsatz. Um das Gefieder des Geflügels, zu dem u.a. Hühnchen, Truthähne, Enten, Gänse und andere in der Nahrungsmittelindustrie zu verarbeitende und Federn tragende Vögel und Wasservögel zählen, für das eigentliche Entfiedern bzw. Rupfen der Federn vorzubereiten, werden die Federn durch das erwärmte/erhitzte Brühmedium im Bereich der Federkiele quasi aufgeweicht bzw. angelöst. Dazu wird das Geflügel entlang eines Brühkanals dem Brühmedium, wie z.B. heißem Wasserdampf oder heißem Wasser, ausgesetzt. Beim Transport des an den Füßen und/oder Beinen aufgehängten Geflügels entlang des Brühkanals bzw. in dem Brühkanal in Transportrichtung T taucht das Geflügel dabei gar nicht, teilweise oder ganz in das in dem Brühtank befindliche Brühmedium ein, so dass es mehr oder weniger von diesem umspült wird. Gerade bei Vorrichtungen und Verfahren, bei denen das Geflügel ganz oder zumindest teilweise in das Brühmedium eintaucht, das Brühmedium also so hoch in dem Brühtank steht, dass es nicht nur im Aufnahmeraum unterhalb des Brühkanals, sondern auch entlang und innerhalb des gesamten Brühkanals steht, wird das Geflügel beim Transportieren durch den Brühkanal durch das Brühmedium gezogen, wodurch es - aufgehängt an den Füßen/Beinen - durch die Transportgeschwindigkeit aufschwimmt. Anders ausgedrückt bildet das Brühmedium einen Widerstand und "bremst" das Geflügel, so dass es bedingt durch den Weitertransport in eine schräge Position gezogen wird und im ungünstigsten Fall an die Oberfläche gelangt, was als Aufschwimmen bezeichnet wird.

Der Brühkanal weist zur Bildung einer ausreichend langen Brühstrecke mindestens zwei Transportstrecken auf. Jede Transportstrecke erstreckt sich linear von einer Stirnwand zur gegenüberliegenden Stirnwand und verläuft im Wesentlichen parallel zu den Seitenwänden. Um die linearen Transportstrecken zu verbinden, sind Verbindungsstrecken zur 180-Grad-Umlenkung vorgesehen. Lineare Transportstrecken sind ebenso wie gekrümmte Verbindungsstrecken aus zwei beabstandet zueinander angeordneten Trennwänden und einer Bodenwand gebildet, so dass sich im Querschnitt U-förmige, lineare bzw. gekrümmte Brühkanalabschnitte bilden. Bei einer Vorrichtung mit zwei Transportstrecken sind entsprechend zwei lineare Brühkanalabschnitte gebildet, die mit einem gekrümmten Brühkanalabschnitt verbunden und umgelenkt sind. Bei drei Transportstrecken sind drei lineare Brühkanalabschnitte gebildet, die mit zwei gekrümmten Brühkanalabschnitten verbunden und umgelenkt sind. Bei bekannten Vorrichtungen mit zwei oder mehr Transportstrecken sind diese also quasi meanderförmig durch den Brühtank geführt, mit der Folge, dass es zu Umlenkungen kommt, um das Geflügel vom Eingabebereich zum Ausgabebereich zu transportieren. Je nach Transportrichtung kann der Eingabebereich auch Ausgabereich sein und umgekehrt. Eingabebereich und Ausgabereich können an einer Stirnwand oder an gegenüberliegenden Stirnwänden angeordnet sein.

Zusätzlich zum Eintauchen des Geflügels in das Brühmedium wird das Geflügel mit Brühmedium, das innerhalb des Brühtanks zirkuliert, beaufschlagt, indem das flüssige Brühmedium verwirbelt wird, so dass es entlang des Brühkanals abschnittsweise aus dem unterhalb des Brühkanals befindlichen Aufnahmeraum über freie Kanten von den Brühkanal begrenzenden Trennwänden von oben in den Brühkanal zurückströmt. Dadurch wird das Geflügel, insbesondere wenn es gar nicht oder nur teilweise in das Brühmedium innerhalb des Brühkanals eintaucht, überhaupt bzw. zusätzlich mit Brühmedium versorgt bzw. diesem ausgesetzt.

Das Brühmedium ist üblicherweise erwärmtes Wasser, das entweder bereits erwärmt zugeführt und/oder erst im Brühtank erwärmt wird. Das Brühmedium kann aber auch mit Zusätzen versehenes Wasser oder jedes andere fließfähige Medium sein. Das Brühmedium befindet sich mindestens im Bereich der Bodenwand des Brühtanks in einem Aufnahmeraum unterhalb des Brühkanals. Die Freiräume, gebildet zwischen Trennwänden benachbarter Brühkanalabschnitte sowie zwischen Trennwänden und Seitenwänden und Stirnwänden des Brühtanks, und der Aufnahmeraum stehen in Fließverbindung miteinander und bilden eine Kammer. Das Brühmedium wird durch den oder jeden Verwirbelungskörper verwirbelt und strömt aus dem Aufnahmeraum, der bei bekannten Vorrichtungen ausschließlich unterhalb der linearen Brühkanalabschnitte ausgebildet ist, nach oben durch die Freiräume, um von oben wieder über freie Kanten der den Brühkanal begrenzenden Trennwände in den Brühkanal zu strömen, allerdings beschränkt auf die linearen Brühkanalabschnitte, unter denen sich der Aufnahmeraum befindet. Durch dieses Überströmen wird das Geflügel entlang der linearen Brühkanalabschnitte mit dem Brühmedium beaufschlagt. Durch die im Aufnahmeraum bzw. in der Kammer erzeugte Strömung wird das Brühmedium im Bereich der linearen Brühkanalabschnitte quasi aus dem Brühkanal gesaugt und entlang der Freiräume nach oben geleitet, wo es über die freien Kanten der Trennwände in der Art eines Wasserfalls zurück in den Brühkanal fließt. Der Saugeffekt im Bereich der Bodenwand der linearen Brühkanalabschnitte führt, für den Fall, dass das Geflügel mindestens teilweise in das Brühmedium eingetaucht ist, dazu, dass in dem Brühkanal transportiertes Geflügel durch eine vertikal nach unten gerichtete Zugkraft nach unten gezogen und in der hängenden, vertikal gerichteten Position und gegen den Effekt des Aufschwimmens stabilisiert wird. In den gekrümmten Brühkanalabschnitten fehlen sowohl das Überströmen des Brühmediums von oben in den Brühkanal als auch der Saugeffekt zum Stabilisieren der vertikal nach unten gerichteten Position des Geflügels. Gerade im Bereich der gekrümmten Brühkanalabschnitte ist der Brühprozess zumindest teilweise unterbrochen bzw. reduziert, was zu ungleichmäßigen und unzureichenden Brühergebnissen führt.

Es bestehen zunehmend höhere Anforderungen an die Leistungsfähigkeit solcher Vorrichtungen und Verfahren. Mit anderen Worten sind höhere Durchsatzraten erforderlich, die durch eine Erhöhung der Transportgeschwindigkeit durch den Brühtank erreicht werden. Eine erhöhte Transportgeschwindigkeit verstärkt jedoch die zuvor genannten und unerwünschten Effekte, wodurch das Brühergebnis noch weiter beeinträchtigt wird. Bestehende Vorrichtungen und Verfahren haben ihre Leistungsgrenze für ein akzeptables Brühergebnis entsprechend erreicht oder schon überschritten. Der Patentschrift U4947518A offenbart eine Vorrichtung, ausgebildet und eingerichtet zum Brühen von geschlachtetem Geflügel,

Der Erfindung liegt somit die Aufgabe zugrunde, eine Vorrichtung zu schaffen, die einerseits eine hohe Transportgeschwindigkeit des Geflügels durch den Brühtank gewährleistet und andererseits ein optimales Brühergebnis liefert. Die Aufgabe besteht des Weiteren darin, ein entsprechendes Verfahren vorzuschlagen.

Diese Aufgabe wird durch eine Vorrichtung mit den eingangs genannten Merkmalen dadurch gelöst, dass sich der Aufnahmeraum unterhalb des gesamten Brühkanals erstreckt, also zwischen den Bodenwänden der linearen und der gekrümmten Brühkanalabschnitte einerseits und der Bodenwand des Brühtanks andererseits, wobei in dem sich dadurch bis in den Bereich der gekrümmten Brühkanalabschnitte erstreckenden Aufnahmeraum mindestens eine Pumpeneinrichtung als Verwirbelungskörper zur Bildung einer entlang des gesamten Brühkanals wirkenden Druckkammer angeordnet ist. Durch die Bildung einer Druckkammer, die den gesamten Brühtank erfasst, also ihren Saug- und Pumpeffekt durchgängig auf den Brühkanal in seiner gesamten Länge ausübt, und zwar unabhängig davon, wo die oder jede Pumpeneinrichtung entlang des Brühkanals positioniert ist, wird mittels der oder jeder Pumpeneinrichtung das flüssige Brühmedium aus dem Brühkanal im Bereich der Bodenwand nach unten abgesaugt und über den Aufnahmeraum und die Freiräume nach oben zurück in den Brühkanal gepumpt, derart, dass das flüssige Brühmedium beidseitig über die freien Kanten der Trennwände strömt, und zwar entlang der linearen und gekrümmten Brühkanalabschnitte. Mit dieser erfindungsgemäßen Ausbildung der Vorrichtung wird auf überraschend einfache und effektive Weise ein Doppeleffekt erzielt. Zum einen bewirkt die oder jede Pumpeneinrichtung einen Saugeffekt in dem und entlang des gesamten Brühkanals, nämlich sowohl in den linearen Brühkanalabschnitten als auch in den gekrümmten Brühkanalabschnitten, wodurch das sich in dem Brühkanal befindliche Geflügel für den Fall, dass das Geflügel mindestens teilweise in das Brühmedium eingetaucht ist, nach unten gezogen und damit ausgerichtet und in der vertikal gerichteten Position stabilisiert wird. Dadurch wird dem Effekt des Aufschwimmens insbesondere auch in den Umlenkungen, also den gekrümmten Brühkanalabschnitten, auch und insbesondere bei erhöhter Transportgeschwindigkeit wirksam entgegengewirkt. Das Geflügel wird dadurch ganz oder teilweise zuverlässig unterhalb der Oberfläche des Brühmediums für eine maximale Beaufschlagung mit demselben gehalten. Mit anderen Worten ermöglicht der über die ganze Länge des Brühkanals wirkende Saugeffekt eine höhere Transportgeschwindigkeit des Geflügels durch die Vorrichtung bei gleichbleibendem oder sogar verbessertem Brühergebnis. Zum anderen gewährleistet die entlang des gesamten Brühkanals erzeugte, beidseitige Überströmung der Trennwände, und zwar sowohl in den linearen Brühkanalabschnitten als auch in den gekrümmten Brühkanalabschnitten, dass das Geflügel selbst für den Fall, dass das Geflügel aufgrund eines geringen Füllstands des Brühtanks gar nicht oder nur teilweise in das Brühmedium eintaucht, über die gesamte Länge des Brühkanals einer ausreichenden, gleichmäßigen und durchgängigen Beaufschlagung des frei und oberhalb der Oberfläche des Brühmediums hängenden oder nur teilweise in das Brühmedium eingetauchten Geflügels ausgesetzt ist. Dadurch, dass das Brühmedium beidseitig von oben auf das Geflügel strömt, wird das Geflügel zusätzlich nach unten gedrückt. Der konstante, beidseitige Wasserschwall, der von oben auf das Geflügel wirkt, positioniert das Geflügel unabhängig vom Füllstand des Brühtanks mit Brühmedium, also sowohl in einem "low level"-Zustand als auch in einem "high level"-Zustand als auch in jedem Zwischenzustand, in vertikaler Richtung nach unten und auch quer zur Transportrichtung T durchgehend in der Mitte des Brühkanals. Die Kombination der Merkmale der erfindungsgemäßen Ausführungsform der Vorrichtung führt zu einem verbesserten Brühergebnis bei höherem Durchsatz.

Ein weiterer Vorteil besteht darin, dass durch das beidseitige und durchgängige Überströmen der Trennwände der Füllstand des Brühmediums im Brühtank gesenkt werden kann, wodurch zum einen die Transportgeschwindigkeit des Geflügels ohne negativen Effekt erhöht werden kann. Der geringere Füllstand reduziert den "Bremseffekt" auf das Geflügel, so dass die Gefahr des Aufschwimmens reduziert ist, während das beidseitige Überströmen dafür sorgt, dass das Geflügel dennoch vollständig, gleichmäßig und durchgängig mit Brühmedium beaufschlagt wird. Zum anderen kann mindestens ein Teil des überströmenden Brühmediums durch ein Sieb oder dergleichen zum Filtern des Brühmediums geleitet werden kann.

Eine besonders bevorzugte Ausführungsform der Vorrichtung ist dadurch gekennzeichnet, dass entlang jeder Transportstrecke mindestens zwei Pumpeneinrichtungen angeordnet sind und jede Pumpeneinrichtung einen Pumpenkörper mit einer vertikal gerichteten Antriebswelle mit einem rotierend antreibbaren Flügelrad sowie einen Antrieb umfasst, wobei mindestens das Flügelrad im Bereich der Bodenwand des oder jedes Brühkanalabschnitts innerhalb des Brühtanks und der Antrieb außerhalb des Brühtanks angeordnet ist. Eine vertikal gerichtete Antriebswelle bedeutet, dass diese im Wesentlichen senkrecht zur Bodenwand ausgerichtet ist. Die Antriebwelle erstreckt sich ausgehend von der Bodenwand des Brühtanks nach oben in Richtung der Bodenwand des Brühkanals. Damit ist zum einen eine hohe Saugwirkung über die gesamte Länge jeder Transportstrecke bis in den Umlenkbereich hinein gewährleistet. Zum andern stellt die Platzierung der Antriebe außerhalb des Brühtanks sicher, dass diese gegenüber dem Eindringen von Brühmedium wirksam geschützt sind. Durch die Anzahl und die Positionierung der Pumpeneinrichtungen, die jeweils variabel ist, ist eine Ausführungsform geschaffen, die unterhalb des gesamten Brühkanals in der Kammer einen Überdruck erzeugt, der ausreichend ist, um das Brühmedium über die gesamte Länge aus dem Brühkanal zu saugen und vertikal nach oben durch die Freiräume, an den Mitteln zum Erwärmen des Brühmediums vorbei, zu pumpen, damit das dann (erneut) erwärmte Brühmedium beidseitig von oben in den Brühkanal zurückströmt. Die bevorzugte Ausrichtung der Antriebswelle gilt selbstverständlich auch für Ausführungsformen mit mindestens einer Pumpeneinrichtung.

In einer bevorzugten Ausführungsform ist jedem linearen Brühkanalabschnitt mindestens eine separate Pumpeneinrichtung zugeordnet. Mit anderen Worten ist entlang einer Transportstrecke mindestens eine Pumpeneinrichtung, vorzugsweise sind jedoch zwei und in Abhängigkeit der Länge der Transportstrecke auch mehr als zwei Pumpeneinrichtungen, angeordnet. Jede dieser Pumpeneinrichtungen wirkt ausschließlich auf eine Transportstrecke. Das bedeutet insbesondere, dass der Durchmesser des Flügelrads vorzugsweise im Wesentlichen der Breite der Transportstrecke entspricht und nur einer einzigen Transportstrecke im Bereich der Bodenwand zugeordnet ist. Die Anzahl der Pumpeneinrichtungen für jede Transportstrecke hängt von deren Länge ab. In Abhängigkeit der Leistungsfähigkeit der Pumpeneinrichtung, grundsätzlich wird von einer maximalen Reichweite des Flügelrades von ca. 3,5m im Durchmesser ausgegangen, sollte der Abstand der Pumpeneinrichtungen zueinander nicht mehr als 3,5m betragen. Bei geringerer Leistungsfähigkeit kann auch ein geringerer Abstand gewählt sein.

In einer weiteren, besonders bevorzugten Ausführungsform ist mindestens zwei benachbart und parallel zueinander verlaufenden Brühkanalabschnitten mindestens eine gemeinsame Pumpeneinrichtung zugeordnet. Damit ist jede Pumpeneinrichtung vorzugsweise mittig zwischen zwei Transportstrecken im Bereich der Bodenwand angeordnet, so dass das Flügelrad in Wirkverbindung zu mindestens zwei Transportstrecken steht. Mit anderen Worten sind zwei oder mehr benachbarte Transportstrecken an eine gemeinsame Pumpeneinrichtung angeschlossen. Das Flügelrad erstreckt sich im Bodenbereich der Brühkanalabschnitte quer zur Transportrichtung über Teile von mindestens zwei Transportstrecken. Entlang der Transportstrecken können mehrere solcher Pumpeneinrichtungen in Transportrichtung T hintereinander angeordnet sein. Hinsichtlich der Abstände zueinander und zu den gekrümmten Brühkanalabschnitten gilt in entsprechender Weise das Vorstehende.

Vorteilhafterweise ist/sind quer zur Längserstreckung der linearen Brühkanalabschnitte mindestens eine Reihe, vorzugsweise zwei Reihen, aus Pumpeneinrichtungen ausgebildet und angeordnet, wobei der maximale Abstand der Pumpeneinrichtungen zu den gekrümmten Brühkanalabschnitten ca. 3,5m beträgt. Eine Reihe umfasst mindestens zwei, in anderen Ausführungsformen auch drei oder mehr Pumpeneinrichtungen, die vorzugsweise in einer Flucht quer zur Transportrichtung angeordnet sind. Die einzelnen Pumpeneinrichtungen einer Reihe können aber auch versetzt zueinander angeordnet sein. Die Pumpeneinrichtungen einer Reihe bilden ein Pumpenmodul. Vorzugsweise sind mehrerer solcher Pumpenmodule vorgesehen. Die zugehörigen Antriebe für die Flügelräder jeder Pumpeneinrichtung können auf einer Seite oder auf gegenüberliegenden Seiten des Pumpenmoduls angeordnet sein. Vorzugsweise wird zur Übertragung des Antriebsmoments auf die vertikal gerichteten Antriebssachsen ein Riemenantrieb eingesetzt. Andere Antriebskonzepte sind aber ebenfalls einsatzbar.

In einer bevorzugten Weiterbildung bilden zwei oder mehr Pumpeneinrichtungen einer Reihe ein Pumpenmodul, das zusammen mit Mittelmodulen mit linearen Brühkanalabschnittteilen und Endmodulen mit linearen und gekrümmten Brühkanalabschnittteilen eine modular aufgebaute Vorrichtung mit dem durchgängigen Brühkanal bildet. Durch die modulare Bauweise der Vorrichtung kann auf einfache Weise eine Anpassung an unterschiedliche Gegebenheiten erfolgen. Insbesondere ist auch der einfache Austausch eines oder jedes Pumpenmoduls und/oder die Ergänzung von Pumpenmodulen vorteilhaft, da die Vorrichtung z.B. an unterschiedliche Längen und/oder unterschiedliche Leistungsstufen angepasst werden kann.

Eine besonders vorteilhafte Ausführungsform ist dadurch gekennzeichnet, dass benachbarte, einen Brühkanalabschnitt begrenzende Trennwände unterschiedliche Höhen aufweisen, derart, dass eine der Rückenseite des Geflügels zugewandte Trennwand niedriger ausgebildet ist als eine gegenüberliegende, der Brustseite des Geflügels zugewandte Trennwand. Die unterschiedliche Höhe der Trennwände betrifft sowohl die linearen als auch die gekrümmten Brühkanalabschnitte, so dass sich dieser Effekt über die gesamte Länge des Brühkanals erstrecken kann. Das Transportmittel und der Brühtank sind so zueinander angeordnet und eingerichtet, dass das Geflügel quasi seitlich durch den Brühkanal transportiert wird, so dass die Rückenseite und die Brustseite den beiden den Brühkanal begrenzenden Trennwänden zugewandt sind. Die Beaufschlagung von Rückenseite und Brustseite mit unterschiedlichen Volumina kann optional z.B. durch eine gezielte Pumpensteuerung erfolgen. Besonders einfach und effektiv ist jedoch die unterschiedliche Bauhöhe der beiden den Brühkanal begrenzenden Trennwände, so dass das Brühmedium bei einer Trennwand mit geringerer Höhe eher/früher und mit mehr Volumen auf die Rückenseite als auf die Brustseite trifft. Damit kann gezielt darauf eingewirkt werden, dass das Geflügel auf der Rückenseite mehr Federn und schwerer zu lösende Federn aufweist als auf der Brustseite, weshalb auf der Rückenseite ein intensiverer Brühprozess mit größerem Brühvolumen angestrebt wird als auf der Brustseite.

Vorzugsweise ist die der Rückenseite zugewandte Trennwand mindestens einen Zentimeter, optional auch mindestens zwei Zentimeter und weiter optional auch mindestens drei Zentimeter niedriger als die der Brustseite zugewandte Trennwand. Bei einem Zentimeter Höhendifferenz zwischen den Trennwänden eines Brühkanalabschnitts teilt sich der Gesamtvolumenstrom etwa im Verhältnis 40:60 (Brustseite/Rückenseite), bei zwei Zentimetern etwa im Verhältnis 30:70 (Brustseite/Rückenseite) und bei drei Zentimetern etwa im Verhältnis 20:80 (Brustseite/Rückenseite) auf.

In einer besonders vorteilhaften Ausführungsform ist die Höhe mindestens einer der Trennwände jedes Brühkanalabschnitts variabel verstellbar ausgebildet. Beispielsweise besteht die Möglichkeit, dass eine Trennwand, vorzugsweise die der Rückenseite zugewandte Trennwand, in ihrer Höhe mindestens abschnittsweise teleskopartig ausgebildet ist. Es besteht auch die Möglichkeit, die Höhendifferenz durch einfache Steckelemente zu variieren. Weitere Optionen sind z.B. durch motorisch verstellbare Lösungen gebildet. Unabhängig von der technischen Umsetzung der Verstellbarkeit einer Trennwand oder beider Trennwände ist damit eine individuelle Anpassung der jeweils auf die Rückenseite bzw. die Brustseite strömenden Volumina, beispielsweise in Abhängigkeit der Größe des zu brühenden Geflügels, zur Verbesserung des Brühergebnisses erreicht.

Eine bevorzugte Variante der Vorrichtung ist dadurch gekennzeichnet, dass mindestens eine der Trennwände eines Brühkanalabschnitts mindestens auf einer der Transportstrecke zugewandten Innenseite eine mindestens abschnittsweise an die Kontur des Geflügels angepasste Form aufweist. Grundsätzlich können die beabstandet zueinander stehenden Trennwände eines Brühkanalabschnitts z.B. eben ausgebildet sein. Die Trennwände können parallel oder in Richtung der Bodenwand konvergierend angeordnet sein. Besonders bevorzugt sind jedoch beide Trennwände zumindest auf der nach innen, dem zu brühenden Geflügel zugewandten Innenseite konturiert ausgebildet. Der Verlauf der Kontur kann variieren. Eine bevorzugte Kontur sieht vor, dass die Breite des Brühkanals mindestens abschnittsweise reduziert ist, derart, dass das überströmende Brühmedium in Richtung des Geflügels gelenkt wird, wodurch das Brühmedium mit einer größeren Kraft und einer höheren Geschwindigkeit auf das Geflügel gerichtet ist und auf dieses trifft. Durch diesen Effekt kann das Brühmedium durch die festeren Deckfedern in äußeren Schichten effizienter in Richtung Haut dringen, um die Federn im Übergang zur Haut anzulösen, wodurch das Brühergebnis verbessert wird. Es besteht weiterhin die Möglichkeit, dass auch nur eine der Trennwände, vorzugsweise die der Rückenseite zugewandte Trennwand, eine entsprechende Formgebung aufweist.

Eine besonders bevorzugte Ausführungsform ist dadurch gekennzeichnet, dass zur Bildung eines entgegen der Transportrichtung des Geflügels gerichteten Gegenstroms im Ausgabebereich des Geflügels aus dem Brühtank mindestens eine Düseneinrichtung zum Einleiten von vorzugsweise erwärmtem, sauberem Wasser angeordnet ist, während im Eingabebereich des Geflügels in den Brühtank mindestens ein Auslass zum Ablassen des verschmutzten Wassers ausgebildet ist. Damit wird ein so genannter "True Counterflow" zur Verfügung gestellt. Vorzugsweise ist eine einzelne Düse im Ausgabebereich, z.B. im Bereich einer Stirnwand des Brühtanks, angeordnet, mittels der, vorzugsweise mit einstellbarem Druck, Frischwasser in Richtung des Eingabebereichs und in jedem Fall entgegen der Transportrichtung des Geflügels gepumpt wird. Die Düseneinrichtung kann aber auch mehrere Düsen im Ausgabebereich aufweisen. Es besteht auch die Möglichkeit, dass die Düseneinrichtung mehrere Düsen umfasst, die an gegenüberliegenden Stirnwänden des Brühtanks positioniert sind, um den Gegenstrom in jeder Transportstrecke entgegen der Transportrichtung "anzutreiben". Das Frischwasser strömt entsprechend zu jeder Zeit gegen die Transportrichtung, wodurch das Geflügel mindestens teilweise von Schmutz und losen Federn befreit wird und diese Verunreinigungen mit dem Strom in Richtung Eingabebereich mitgerissen werden. Entsprechend wird der Gegenstrom in Richtung Eingabebereich zunehmend schmutziger, während das Geflügel und auch das Brühmedium in Richtung des Ausgabebereiches zunehmend sauberer werden. Um das Strömen des Frischwassers in Richtung des Eingabebereichs zu unterstützen, ist die Düse oder jedes andere Eingabemittel im Ausgabebereich höher am Brühtank angeordnet als der oder jeder Auslass im Eingabebereich. Neben der "Reinigungsfunktion" des zugeführten Frischwassers als Gegenstrom kann das zugeführte Frischwasser auch dazu führen bzw. genutzt werden, den Wasserverlust, insbesondere bedingt durch die Tatsache, dass das Geflügel beim Brühprozess diesem Wasser durch Aufnahme im Federkleid entzieht, zu kompensieren.

Da das Geflügel während des Transports entlang des Brühkanals Brühmedium aufnimmt, Brühwasser wird also vom Geflügel insbesondere durch das Federkleid teilweise absorbiert, erfolgt optional nur über die Düseneinrichtung der Ausgleich, um den Wasserverlust zu kompensieren. Darüber kann insbesondere auch der Wasserverlust kompensiert werden, der durch das Ablassen des verunreinigten Wassers im Eingabebereich entsteht. Die entlang des Brühkanals angeordneten Pumpeneinrichtungen dienen in erster Linie und vorzugsweise ausschließlich zum internen Zirkulieren des Brühmediums innerhalb des Brühtanks und haben vorzugsweise keinen Einfluss auf die Wassermenge im Brühtank. Letztlich ist der Wasserkreislauf, der innerhalb der der Druckkammer zirkuliert, somit quasi vom "True Counterflow" entkoppelt bzw. isoliert.

Wie erwähnt, kann eine Pumpeneinrichtung exklusiv einer Transportstrecke bzw. einem Brühkanalabschnitt zugeordnet sein. Vorteilhafterweise ist dazu ein Flügelrad jeder Pumpeneinrichtung in einem Bereich eines Durchbruchs der Bodenwand des Brühkanalabschnitts zur Herstellung einer Strömungsverbindung zwischen dem Brühkanalabschnitt und dem Aufnahmeraum angeordnet, wobei das Flügelrad gegenüber dem Brühkanalabschnitt mindestens teilweise mit einer beabstandet zum Flügelrad angeordneten und ausgebildeten Abdeckung abgeschirmt ist. Die Abdeckung kann ein Gitter sein. Die Abdeckung kann aber auch eine rampenartige Haube oder dergleichen sein, die sich vorzugsweise über die gesamte Breite des Brühkanals erstreckt und in Transportrichtung ausgehend von der Bodenwand geschlossen und schräg nach oben verläuft, während auf der in Transportrichtung abgewandten Seite der Haube eine Öffnung ausgebildet ist, über die die Strömungsverbindung zum Aufnahmeraum hergestellt ist. Andere Ausbildungen und Anordnungen sind aber selbstverständlich möglich.

In anderen Ausführungsformen versorgt die oder jede Pumpeneinrichtung, wie weiter oben beschrieben, mindestens zwei Transportstrecken bzw. Brühkanalabschnitte. Vorzugsweise ist dazu ein Flügelrad jeder Pumpeneinrichtung in einem Bereich eines Durchbruchs jeweils einer Bodenwand und/oder einer Trennwand von mindestens zwei Brühkanalabschnitten zur Herstellung einer Strömungsverbindung zwischen mindestens zwei benachbarten Brühkanalabschnitten und dem Aufnahmeraum angeordnet, wobei das Flügelrad gegenüber dem zwischen benachbarten Trennwänden benachbarter Brühkanalabschnitte gebildeten Freiraum vollständig abgeschirmt ist. Eine bevorzugte Ausführungsform stellt die Verbindung zwischen Brühkanalabschnitt und Aufnahmeraum durch partielle Durchbrüche in der jeweiligen Bodenwand und partiellen Durchbrüchen in beiden den Freiraum begrenzenden Trennwänden her. Der Freiraum selbst ist durch eine Haube oder dergleichen gegenüber dem Flügelrad und damit der Pumpeneinrichtung verschlossen, derart, dass die Haube drei Wandabschnitte aufweist, die sich jeweils von Trennwand zu Trennwand erstrecken. Im Bereich dieser Hauben ist das Pumpen des Brühmediums vertikal nach oben wirksam verhindert. In Transportrichtung vor und hinter den Hauben ist das Pumpen des Brühmediums vertikal nach oben möglich. Damit ist eine beidseitige Überströmung der Trennwände auch in dem Bereich, in dem die Flügelräder angeordnet sind, durchgängig gewährleistet. Andere Ausbildungen und Anordnungen sind aber selbstverständlich möglich. U.a. besteht die Möglichkeit, dass der Freiraum im Bereich der Pumpeneinrichtung unterbrochen bzw. ausgespart ist, derart, dass Wandabschnitte, die quer zur Transportrichtung ausgerichtet sind, sich von Trennwand zu Trennwand erstrecken und den Freiraum dadurch über die gesamte Höhe der Trennwände schließen und gegenüber dem Flügelrad abschirmen.

In einer zweckmäßigen Weiterbildung ist entlang des Brühkanals mindestens ein Verwirbelungskörper als Mittel zur Erzeugung von Verwirbelung und/oder Strömung des Brühmediums angeordnet, der mittels einer horizontal gerichteten und quer zur Transportrichtung T des Geflügels gerichteten Antriebswelle rotierend antreibbar ist. Vorzugsweise umfasst der Verwirbelungskörper einen Impeller, Propeller oder dergleichen. Besonders bevorzugt ist eine Vortex-Wasserturbine als Verwirbelungskörper vorgesehen, die bei einer geringen Umdrehungszahl (z.B. 300 U/min) eine sehr hohe Pumpleistung aufweist und somit für eine energieeffiziente Erzeugung der Verwirbelung und/oder Strömung zur Unterstützung der Pumpleistung der Pumpeneinrichtung sorgt. Damit können die vorstehend beschriebenen Vorteile weiter unterstützt werden, insbesondere dann, wenn die Vortex-Wasserturbine im Bereich der Umlenkungen angeordnet ist.

Vorteilhafterweise ist im Bereich der Seitenwände des Brühtanks mindestens eine verschließbare Öffnung zum Zugang in die Druckkammer, vorzugsweise im Bereich des Eingabebereiches an außenliegenden Transportstrecken, ausgebildet. Beispielhaft können verschließbare Türen, Klappen oder dergleichen vorgesehen sein, die zusätzlich zum Zugang in den Brühtank von oben einen Zugang im Bereich der Bodenwand in den Brühtank bzw. direkt in die Druckkammer ermöglichen. Besonders bevorzugt ist eine solche Reinigungsklappe im Eingabebereich angeordnet.

Zweckmäßigerweise ist dem Brühtank mindestens ein Ablassventil zugeordnet. Das oder jedes Ablassventil ist vorzugsweise im Eingabebereich angeordnet. Die Anzahl und deren Positionierung der Ablassventile können jedoch variieren.

Vorteilhafterweise ist der Vorrichtung eine Steuerungseinrichtung mindestens zum Steuern und/oder Regeln der Mittel zum Erwärmen des Brühmediums zugeordnet. An die Steuerungseinrichtung kann aber optional z.B. auch ein Mittel zum Ermitteln der Füllstandhöhe des Brühmediums innerhalb des Brühtanks und/oder das oder jedes Ablassventil angeschlossen sein. Weitere Anbindungen der Steuerungseinrichtung und deren Netzwerkeinbindung sind ebenfalls möglich.

Die Aufgabe wird auch durch ein Verfahren mit den eingangs genannten Schritten dadurch gelöst, dass das Brühmedium mittels mindestens einer Pumpeneinrichtung von unten aus dem Brühkanal gesaugt und über die gesamte Länge des Brühkanals, also im Bereich der linearen und der gekrümmten Brühkanalabschnitte, zu beiden Seiten desselben von oben zurück in den Brühkanal gepumpt wird.

Vorzugsweise wird das Geflügel seitlich durch den aus einander gegenüberliegenden Trennwänden begrenzten Brühkanal transportiert, derart, dass das Geflügel beim Transportieren mit einer Rückenseite zu einer Trennwand und mit einer Brustseite zu der gegenüberliegenden Trennwand gerichtet ist, wobei über die Trennwand, die der Rückenseite zugewandt ist, ein größeres Brühmediumvolumen von oben zurück in den Brühkanal zurückgeführt wird als über die Trennwand, die der Brustseite zugewandt ist.

Vorteilhafterweise wird ausgehend vom Ausgabebereich in Richtung des Eingabebereichs Frischwasser zur Erzeugung eines Gegenstroms entgegen der Transportrichtung T des Geflügels zugeführt, so dass das Geflügel gegen den Strom des Frischwassers transportiert wird und sich verschmutztes Brühmedium im Eingabebereich sammelt und das Geflügel in Richtung des Ausgabebereiches durch zunehmend sauberes Brühmedium transportiert wird.

Optional taucht das Geflügel beim Transportieren durch den Brühkanal wahlweise vollständig, teilweise oder gar nicht in das Brühmedium ein. Wenn das Geflügel gar nicht in das Brühmedium eintaucht, liegt der Füllstand "low level" vor. Taucht das Geflügel vollständig (vorzugsweise mit Ausnahme der Füße/Beine) in das Brühmedium ein, liegt der Füllstand "high level" vor. Zwischen "low level" und "high level" ist jeder Füllstand realisierbar, wobei der durch das Brühmedium erzeugte Widerstand gegen das Geflügel beim Transport desselben durch den Brühkanal mit sinkendem Füllstand sinkt und bei "low level" aufgehoben ist.

Zweckmäßigerweise wird das Brühmedium mittels einer Filtereinrichtung gereinigt. Das Reinigen kann während des Betriebs der Vorrichtung und/oder während einer Betriebsunterbrechung erfolgen.

Eine bevorzugte Weiterbildung ist dadurch gekennzeichnet, dass das Brühmedium selbst innerhalb des Brühtanks zirkuliert, nämlich aus dem Brühkanal gesaugt und als beidseitiger Überstrom in den Brühkanal zurückgeführt wird, und vorerwärmtes Frischwasser im Ausgabebereich entgegen der Transportrichtung T mit Druck in den Brühkanal gepumpt wird.

Vorteilhafterweise wird das Brühmedium im Bereich von Bodenwänden mit mehreren Pumpeinrichtungen aus dem Brühkanal gesaugt und zu beiden Seiten des Brühkanals nach oben gepumpt, so dass es zu beiden Seiten von oben zurück in den Brühkanal strömt, wobei jeweils mindestens eine Pumpeneinrichtung wahlweise einen Brühkanalabschnitt oder mindestens zwei Brühkanalabschnitte versorgt.

Besonders bevorzugt wird das Verfahren mit einer Vorrichtung nach einem oder mehreren der Ansprüche 1 bis 17 ausgeführt.

Die sich aus dem erfindungsgemäßen Verfahren ergebenden Vorteile wurden bereits im Zusammenhang mit der Vorrichtung ausführlich beschrieben, so dass zur Vermeidung von Wiederholungen auf die entsprechenden Passagen verwiesen wird.

Weitere zweckmäßige und/oder vorteilhafte Merkmale und Weiterbildungen zur Vorrichtung sowie entsprechende Schritte zum Verfahren ergeben sich aus den Unteransprüchen und der Beschreibung. Besonders bevorzugte Ausführungsformen der Vorrichtung sowie das Verfahren werden anhand der beigefügten Zeichnung näher erläutert. In der Zeichnung zeigt:

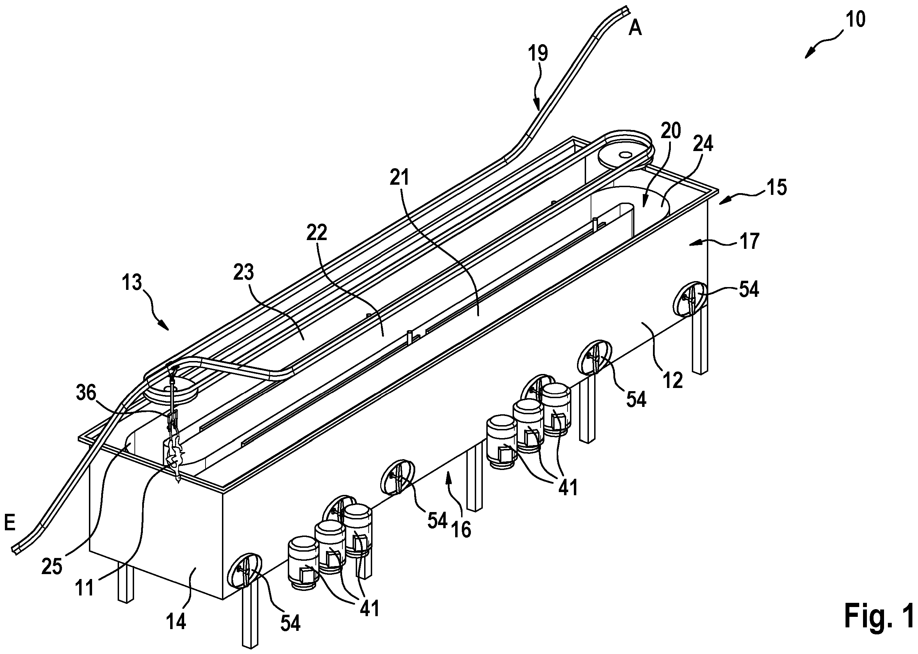

- Fig. 1: eine schematische Darstellung einer erfindungsgemäßen Vorrichtung in perspektivischer Ansicht ohne eine Abdeckhaube,

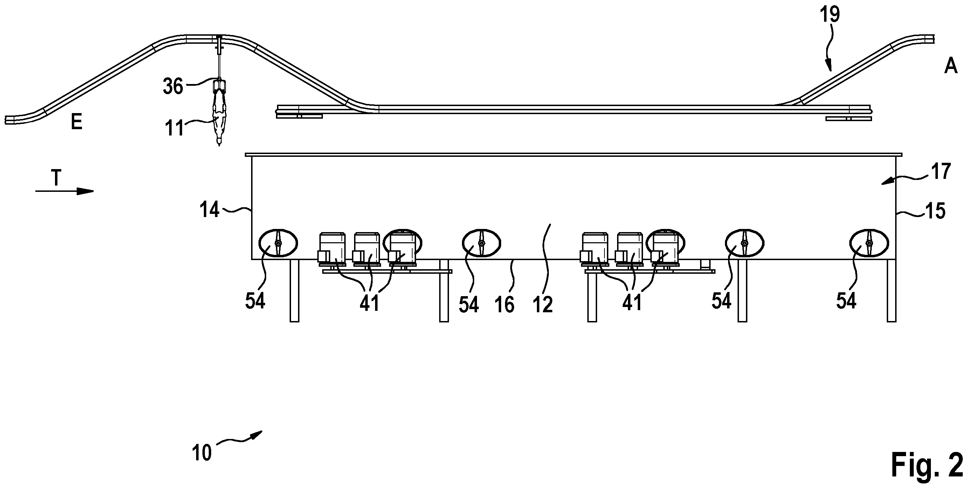

- Fig. 2: die Vorrichtung gemäß Figur 1 in Seitenansicht,
- Fig. 3: die Vorrichtung gemäß Figur 1 in Draufsicht,
- Fig. 4: die Vorrichtung gemäß Figur 1 in Vorderansicht mit Abdeckhaube in einer ersten Schnittdarstellung,
- Fig. 5: die Vorrichtung gemäß Figur 1 in Vorderansicht mit Abdeckhaube in einer weiteren Schnittdarstellung
- Fig. 6: eine Unteransicht auf eine erste Ausführungsform eines Pumpenmoduls der Vorrichtung gemäß Figur 3,

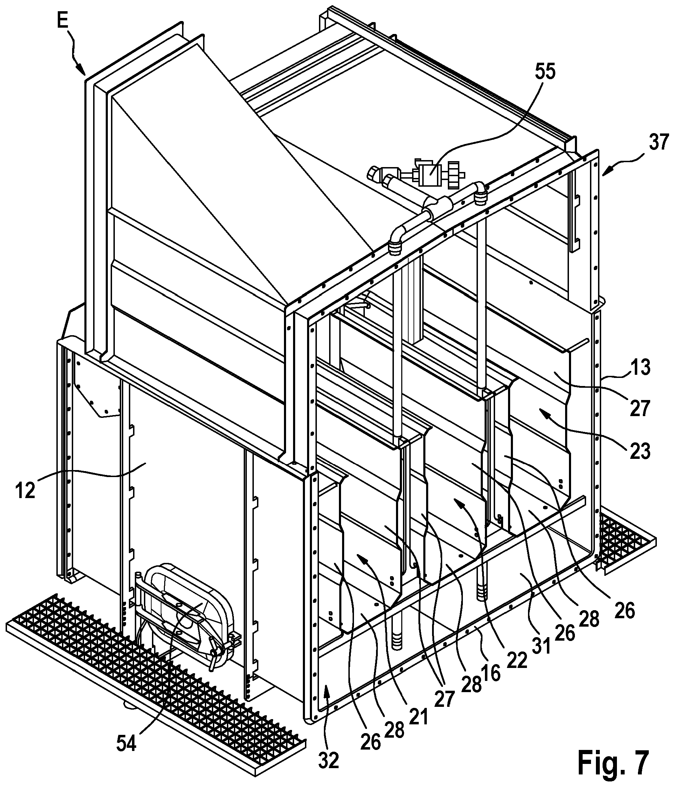

- Fig. 7: ein Endmodul der Vorrichtung gemäß Figur 1 mit Abdeckhaube in perspektivischer Ansicht,

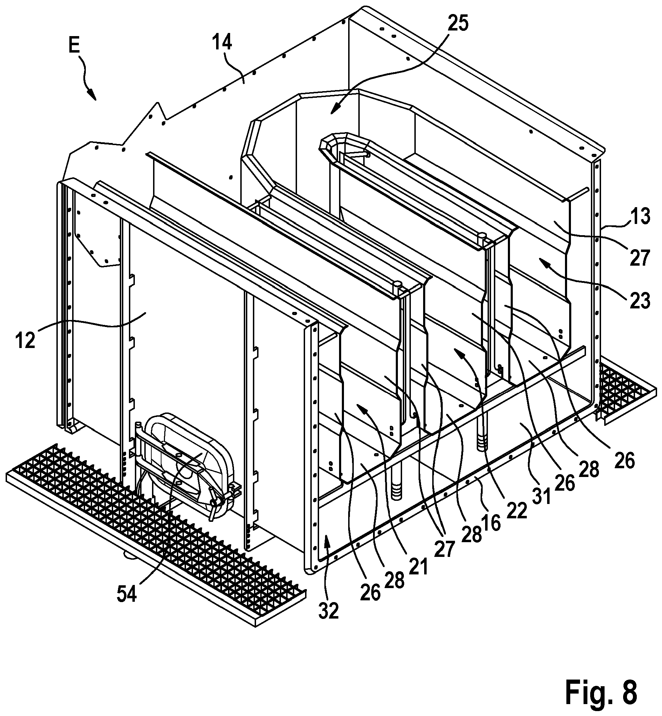

- Fig. 8: das Endmodul gemäß Figur 7 ohne Abdeckhaube,
- Fig. 9: eine weitere Ausführungsform eines Pumpenmoduls in perspektivischer Ansicht von schräg vorne und oben,
- Fig. 10: das Pumpenmodul gemäß Figur 9 in Vorderansicht,
- Fig. 11: das Pumpenmodul gemäß Figur 9 in perspektivischer Ansicht von schräg vorne und unten,
- Fig. 12: eine weitere Ausführungsform des Pumpenmoduls in Vorderansicht,
- Fig. 13: das Pumpenmodul entlang des Schnitts B-B gemäß Figur 12,
- Fig. 14: eine Draufsicht auf das Pumpenmodul gemäß Figur 12,
- Fig. 15: eine vergrößerte Darstellung einer Pumpeneinrichtung in Seitenansicht,

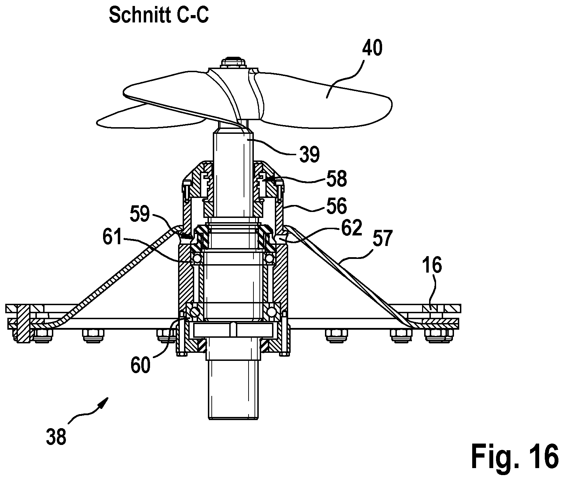

- Fig. 16: eine Schnittdarstellung der Pumpeneinrichtung entlang des Schnitts C-C gemäß Figur 15, und
- Fig. 17: eine schematische Darstellung zweier verbundener Brühvorrichtungen in Modulbauweise in perspektivischer Ansicht.

Die in der Zeichnung dargestellte Vorrichtung dient zum Brühen von Kopf über nach unten hängenden Hühnchen, die innerhalb des Brühtanks durch ein Brühmedium transportiert werden, nämlich derart, dass sich die Hühnchen mindestens teilweise unterhalb der Oberfläche des Brühmediums befinden, so dass die Hühnchen durch das in den Transportstrecken stehende Brühmedium und zusätzlich durch das an den Stirnseiten und oben aus dem Kanal strömende Brühmedium beaufschlagt werden. Selbstverständlich kann das Niveau des Brühmediums auch niedriger sein, derart, dass die Hühnchen gar nicht in das Brühmedium eintauchen, so dass die Hühnchen ausschließlich durch das von oben in den Brühkanal strömende Brühmedium beaufschlagt werden, oder auch höher sein, derart, dass die Hühnchen vollständig in das Brühmedium eintauchen, so dass die Hühnchen sowohl durch das in den Transportstrecken stehende Brühmedium als auch durch das von oben in den Brühkanal strömende Brühmedium beaufschlagt werden. Die Erfindung ist in entsprechender Weise auch für Truthähne, Enten, Gänse und andere Vögel und Wasservögel einsetzbar.

Die Vorrichtung 10 ist ausgebildet und eingerichtet zum Brühen von geschlachtetem Geflügel 11 und umfasst einen länglichen, seitlich umlaufend mit Seitenwänden 12, 13 und Stirnwänden 14, 15 und nach unten mit einer Bodenwand 16 geschlossenen und nach oben offenen Brühtank 17 zum Aufnehmen und zum Halten eines flüssigen Brühmediums 18, sowie ein oberhalb des Brühtanks 17 angeordnetes Transportmittel 19 zum hängenden Transportieren des Geflügels 11 innerhalb des Brühtanks 17 entlang eines aus mehreren Brühkanalabschnitten gebildeten Brühkanals 20 von einem Eingabebereich E zu einem Ausgabebereich A, wobei innerhalb des Brühtanks 17 mindestens zwei Transportstrecken 21, 22, 23 für das Geflügel 11 jeweils von einer Stirnseite des Brühtanks 17 zur gegenüberliegenden Stirnseite des Brühtanks 17 ausgebildet sind und die Transportstrecken 21 bis 23 mittels gekrümmter Verbindungsstrecken 24, 25 zur 180-Grad-Umlenkung miteinander verbunden sind, wobei jede Transportstrecke 21 bis 23 und jede Verbindungsstrecke 24, 25 durch zwei quer zur Transportrichtung beabstandet zueinander angeordnete Trennwände 26, 27 und eine Bodenwand 28 zur Bildung nach oben offener linearer Brühkanalabschnitte und nach oben offener gekrümmter Brühkanalabschnitte begrenzt ist, wobei Trennwände 26, 27 benachbarter Brühkanalabschnitte sowie Trennwände 26, 27, die benachbart zu Außenwänden des Brühtanks liegen, beabstandet zueinander zur Bildung eines Freiraums 29 für das Brühmedium 18 angeordnet sind, wobei mindestens den Freiräumen 29 benachbarter Brühkanalabschnitte Mittel 30 zum Zuführen und/oder Erwärmen des Brühmediums 18 zugeordnet sind, und wobei unterhalb mindestens von Teilen des Brühkanals 20, nämlich mindestens zwischen den Bodenwänden 28 der linearen Brühkanalabschnitte und der Bodenwand 16 des Brühtanks 17 ein Aufnahmeraum 31 für Brühmedium 18 gebildet ist, der zusammen mit den Freiräumen 29 eine gemeinsame Kammer 32 bildet, der mindestens ein Verwirbelungskörper 33 zur Erzeugung von Verwirbelung und/oder Strömung des Brühmediums 18 im Brühtank 17 zugeordnet ist.

Erfindungsgemäß zeichnet sich diese Vorrichtung 10 dadurch aus, dass sich der Aufnahmeraum 31 unterhalb des gesamten Brühkanals 20 erstreckt, also zwischen den Bodenwänden 28 der linearen und der gekrümmten Brühkanalabschnitte einerseits und der Bodenwand 16 des Brühtanks 17 andererseits, wobei in dem sich dadurch bis in den Bereich der gekrümmten Brühkanalabschnitte erstreckenden Aufnahmeraum 31 mindestens eine Pumpeneinrichtung 34 als Verwirbelungskörper 33 zur Bildung einer entlang des gesamten Brühkanals 20 wirkenden Druckkammer 35 angeordnet ist.

Die im Folgenden beschriebenen Merkmale und Weiterbildungen stellen für sich betrachtet und in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

Der Brühtank 17 ist ein wannenartiger Körper, der nach unten durch die Bodenwand 16 und seitlich/außen durch die Seitenwände 12, 13 und die Stirnwände 14, 15 begrenzt ist. Der Brühtank 17 erstreckt sich in Transportrichtung T des Transportmittels 19 in Längsrichtung. Die gegenüber den Seitenwänden 12, 13 deutlich kürzeren Stirnwände 14, 15 begrenzen den Brühtank 17 zur Bildung des Aufnahmevolumens für das Brühmedium 18, so dass dieses aufgenommen und gehalten, also bevorratet werden kann. Das Brühmedium 18 kann Wasser oder ein anderes Fluid sein, beispielsweise mit mindestens einem Zusatzstoff angereichertes Wasser oder dergleichen. Die Bodenwand 16 kann horizontal und eben, V-förmig oder anderweitig geformt ausgebildet sein. Der Brühtank 17 kann einstückig oder modular bzw. segmentartig ausgebildet sein und weist in der dargestellten Variante eine Gesamtlänge von bevorzugt ca. 8-10m auf. Die Dimensionen des Brühtanks 17 können aber variieren.

Bei der in der Zeichnung dargestellten Vorrichtung 10 sind in dem Brühtank 17 drei parallel verlaufende Transportstrecken 21 bis 23 ausgebildet, die in ihrer Längserstreckung durch Trennwände 26, 27 mindestens teilweise voneinander getrennt sind. Der Eingabebereich E und der Ausgabebereich A sind an gegenüberliegenden Seiten des Brühtanks 17 angeordnet. Insbesondere bei einer geraden Anzahl von Transportstrecken 21 bis 23 können der Eingabebereich E und der Ausgabebereich A auch an derselben Seite des Brühtanks 17 angeordnet sein. Das Transportmittel 19 ist in der bevorzugten Ausführungsform ein als über-Kopf-Förderer ausgebildeter Hängeförderer, an dem das Geflügel 11 mit den Füßen in Schäkeln 36 hängend entlang der Transportstrecken 21 bis 23 gefördert wird. Der Hängeförderer bzw. dessen Förderschiene ist einerseits meanderförmig parallel zur Bodenwand 16 des Brühtanks 17 geführt, derart, dass die Förderschiene an den Stirnwänden 14, 15 des Brühtanks 17 um 180 Grad umgelenkt ist, um dem Geflügel 11 den Wechsel von der einen Transportstrecke 21 bzw. 22 in die andere Transportstrecke 22 bzw. 23 zu ermöglichen. Im Eingabebereich E und im Ausgabebereich A ist die Förderschiene hinsichtlich ihres Verlaufs senkrecht zur Bodenwand 16 angepasst, um das Geflügel 11 einerseits über die freien Kanten der Stirnwände 14, 15 des Brühtanks 17 zu heben und andererseits das Geflügel 11 in den Brühkanal 20 innerhalb des Brühtanks 17 abzusenken und umgekehrt. Der Brühtank 17 kann optional eine Abdeckhaube 37 aufweisen, die das Transportmittel 19 im Wesentlichen mit einschließt. Zur Vermeidung von Kollisionen des Transportmittels 19 mit der Abdeckhaube 37 ist in der Abdeckhaube 37 jeweils im Eingabebereich E und im Ausgabebereich A eine Öffnung vorgesehen, durch die die Förderschiene in den Brühtank 17 eintreten und austreten kann.

Mit dem Mittel 30 zum Zuführen und/oder Erwärmen von Brühmedium 18 kann optional Dampf oder heißes Wasser in den Brühtank 17 zugeführt werden. In erster Linie ist das Mittel 30 aber zum Erwärmen von Brühmedium 18 ausgebildet, das in den Freiräumen 29 vertikal nach oben in Richtung der freien Kanten der Trennwände 26, 27 strömt. Das Mittel 30 kann ein einfacher Wärmetauscher sein. Andere Heizmittel bzw. Heizelemente sind aber ebenfalls einsetzbar. Dadurch, dass die Mittel 30 in den Freiräumen 29 abgeschirmt gegenüber den Transportstrecken 21 bis 23 des Brühkanals 20 angeordnet sind, wird das Geflügel 11 gegenüber direkter Wärmestrahlung geschützt.

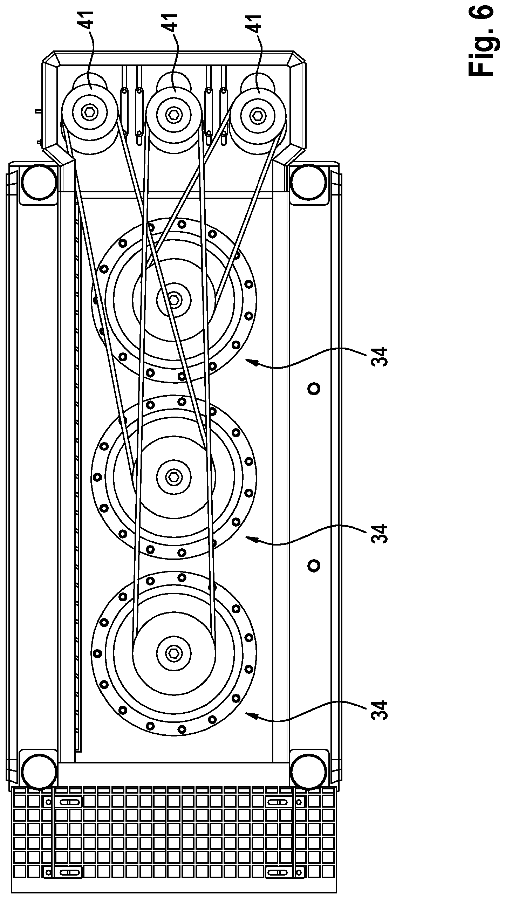

Entlang jeder Transportstrecke 21 bis 23 sind mindestens zwei Pumpeneinrichtungen 34 angeordnet und jede Pumpeneinrichtung 34 umfasst einen Pumpenkörper 38 mit einer vertikal gerichteten Antriebswelle 39 mit einem rotierend antreibbaren Flügelrad 40 sowie einen Antrieb 41, wobei mindestens das Flügelrad 40 im Bereich der Bodenwand 28 des oder jedes Brühkanalabschnitts innerhalb des Brühtanks 17 und der Antrieb 41 außerhalb des Brühtanks 17 angeordnet ist. Die vertikale Ausrichtung der Antriebswelle 39 bedeutet im vorliegenden Ausführungsbeispiel senkrecht zur Bodenwand 16 des Brühtanks 17. Das Flügelrad 40 kann z.B. als Impeller oder Propeller ausgebildet sein. Eine detaillierte Beschreibung der Pumpeneinrichtung 34 folgt weiter unten. Vorzugsweise umfasst jede Pumpeneinrichtung 34 einen eigenen Antrieb 41. Es besteht aber auch die Möglichkeit, dass zwei oder mehr Pumpeneinrichtungen 34 einen gemeinsamen Antrieb 41 nutzen. Die Übertragung des Antriebsmomentes vom Antrieb 41 auf die Antriebswelle 39 ist in der dargestellten Ausführungsform über Riementriebe realisiert (siehe z.B. Figur 6). Andere übliche Antriebskonzepte sind aber ebenfalls einsetzbar.

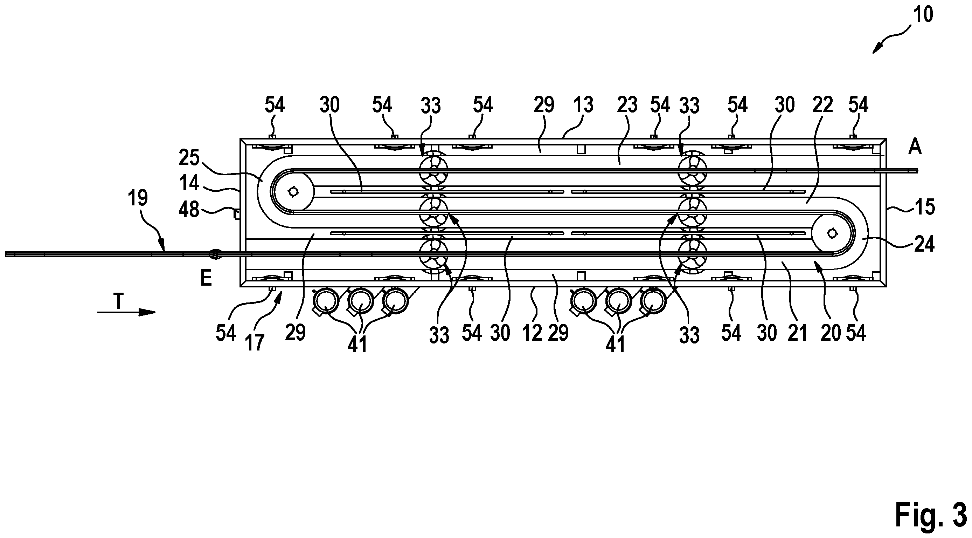

Vorzugsweise ist jedem linearen Brühkanalabschnitt mindestens eine separate Pumpeneinrichtung 34 zugeordnet. Anders ausgedrückt weist jede Transportstrecke 21 bis 23 mindestens eine Pumpeneinrichtung 34 auf. Im Beispiel gemäß den Figuren 3 bis 6 sind allen drei Transportstrecken 21 bis 23 jeweils zwei Pumpeneinrichtungen 34 zugeordnet. Jede Pumpeneinrichtung 34 wirkt nur auf eine Transportstrecke 21 bis 23. Das bedeutet, dass die Saug- und Pumpwirkung jeder Pumpeneinrichtung 34 im Wesentlichen auf eine einzelne Transportstrecke 21 bis 23 beschränkt ist. Dazu liegt das Flügelrad 40 zentral unterhalb der Bodenwand 28 des Brühkanals 20. Die Anzahl der Pumpeneinrichtungen 34 kann grundsätzlich variieren und auch zwischen den einzelnen Transportstrecken 21 bis 23 unterschiedlich sein. Vorzugsweise sind die Pumpeneinrichtungen 34 benachbarter Transportstrecken 21 bis 23 jedoch quer zur Transportrichtung T nebeneinander angeordnet.

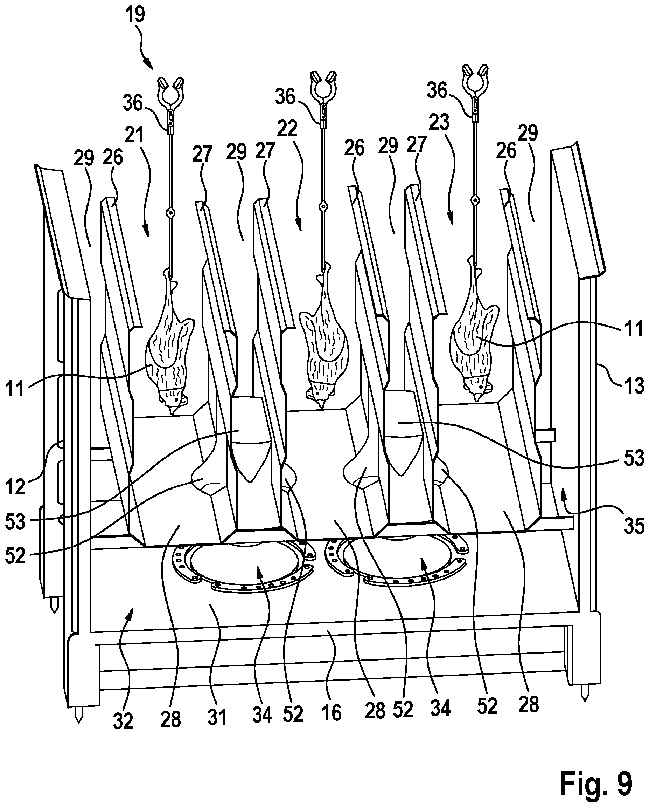

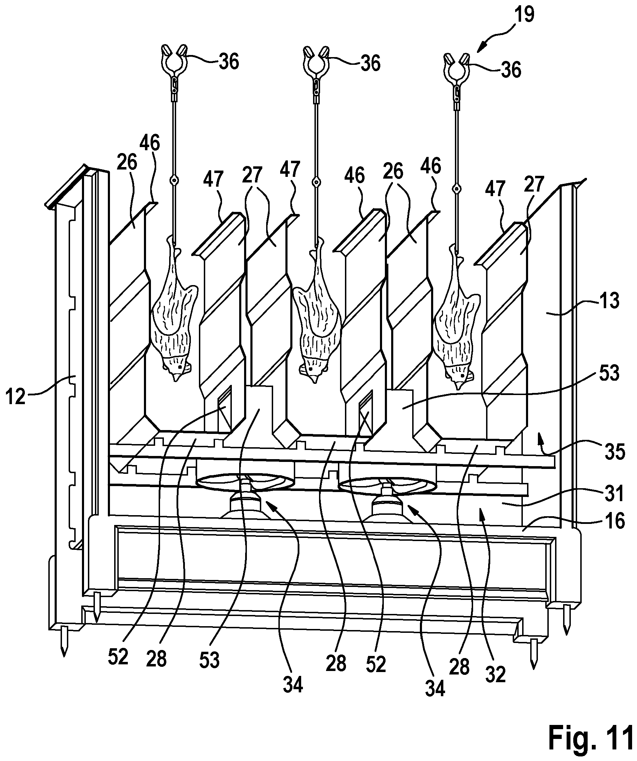

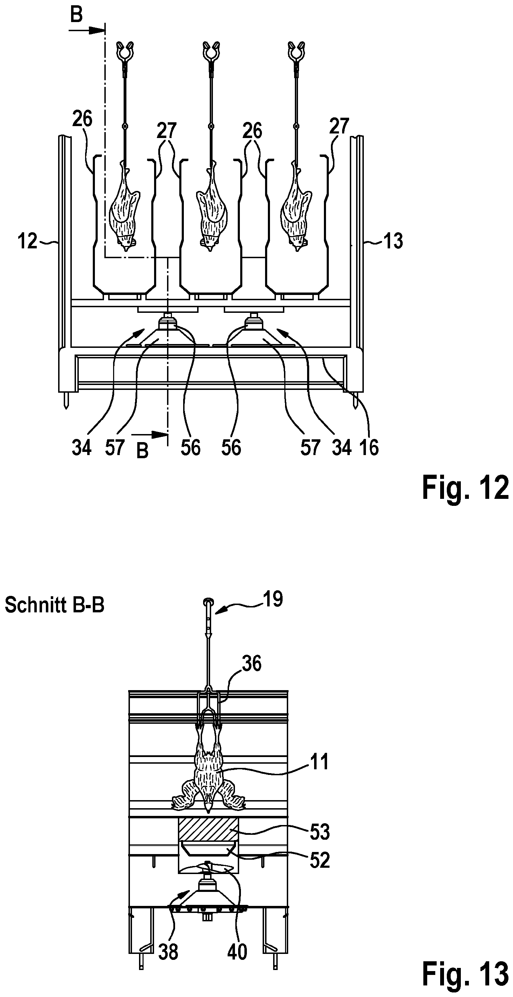

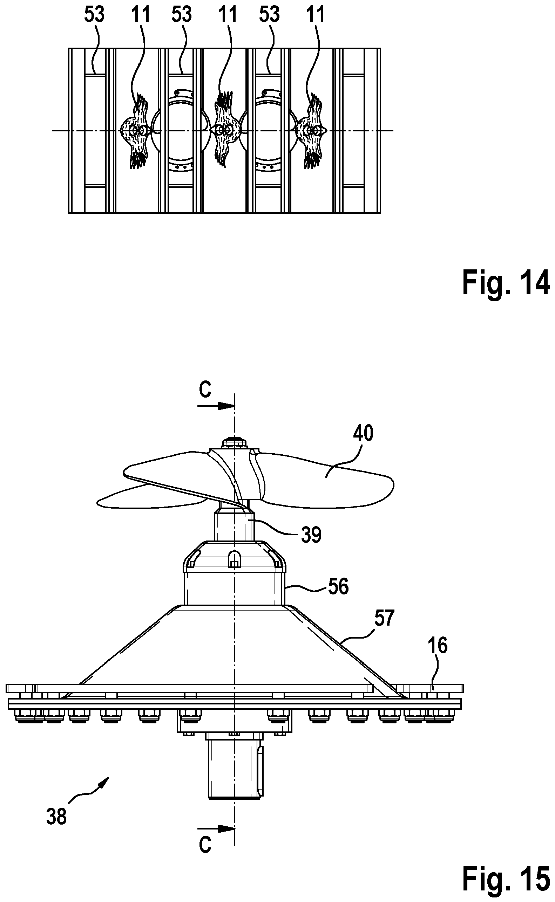

In einer weiteren bevorzugten Ausführungsform (siehe z.B. Figuren 9 bis 14) ist mindestens zwei benachbart und parallel zueinander verlaufenden Brühkanalabschnitten mindestens eine gemeinsame Pumpeneinrichtung 34 zugeordnet. Jede Pumpeneinrichtung 34 wirkt auf zwei Transportstrecken 21, 22 bzw. 22, 23. Das bedeutet, dass eine Pumpeneinrichtung 34 aus zwei Transportstrecken 21, 22 bzw. 22, 23 Brühmedium 18 absaugt und über Freiräume 29 in zwei benachbarte Transportstrecken 21, 22 bzw. 22, 23 des Brühkanals 20 zurückpumpt, indem das Flügelrad 40 mittig zwischen zwei Transportstrecken 21, 22 bzw. 22, 23, also im Wesentlichen zentral unterhalb eines die beiden Transportstrecken 21, 22 bzw. 22, 23 voneinander trennenden Freiraums 29, angeordnet ist. Es besteht weiter die Möglichkeit, dass eine Pumpeneinrichtung 34 drei oder mehr Transportstrecken 21 bis 23 zugeordnet ist.

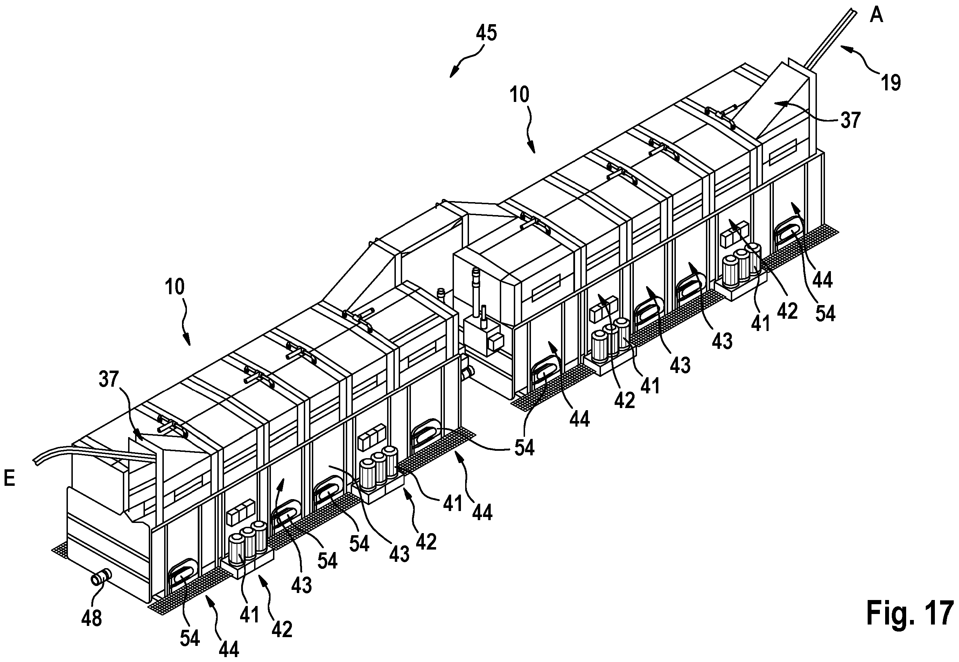

Vorzugsweise ist/sind quer zur Längserstreckung der linearen Brühkanalabschnitte mindestens eine Reihe, vorzugsweise zwei Reihen, aus Pumpeneinrichtungen 34 ausgebildet und angeordnet, wobei der maximale Abstand der Pumpeneinrichtungen 34 zu den gekrümmten Brühkanalabschnitten ca. 3,5m beträgt. Unabhängig von der Zuordnung einer Pumpeneinrichtung 34 zu einer einzelnen Transportstrecke 21, 22, 23 oder zu zwei und mehr Transportstrecken 21 bis 23 ist eine Reihenbildung der Pumpeneinrichtungen 34 zur Bildung eines Pumpenmoduls 42 bevorzugt. Die Antriebe 41 der Pumpeneinrichtungen 34 können auf einer Seite oder beidseitig am Pumpenmodul 42 angeordnet sein. Ein solches Pumpenmodul 42 bildet zusammen mit Mittelmodulen 43 mit linearen Brühkanalabschnittteilen und Endmodulen 44 mit linearen Brühkanalabschnittteilen und gekrümmten Brühkanalabschnitten eine modular aufgebaute Vorrichtung 10 mit dem durchgängigen Brühkanal 20. Eine solche aus den Modulen 42, 43, 44 gebildete Vorrichtung 10 kann als Einzelbrühvorrichtung eingesetzt werden. Optional können aber auch zwei oder mehr solcher Einzelbrühvorrichtungen zu einer Brühlinie 45 miteinander verbunden sein (siehe z.B. Figur 17). Die Anzahl der Module 42 bis 44 kann variabel sein und individuell angepasst werden. Wie weiter oben beschrieben, sollte der maximale Abstand der Pumpeneinrichtungen 34 nicht nur zu den gekrümmten Brühkanalabschnitten, also zu den gekrümmten Verbindungstrecken 24, 25, im Umlenkbereich 3,5m betragen, sondern auch zwischen den einzelnen Pumpeneinrichtungen 34 in Transportrichtung T, um über die gesamte Länge des Brühkanals 20 in allen Bereichen des Brühtanks 17 eine ausreichende Saug- und Pumpleistung zur Verfügung zu stellen. Der Abstand kann selbstverständlich reduziert werden. In Abhängigkeit der Pumpenleistung ist auch ein größerer Abstand der Pumpeneinrichtungen 34 zueinander und/oder zu den gekrümmten Verbindungsstrecken 24, 25 grundsätzlich möglich.

Die Trennwände 26, 27, die den Brühkanal 20 in jeder Transportstrecke 21 bis 23 und jeder Verbindungsstrecke 24, 25 seitlich begrenzen, weisen zum offenen Ende des Brühkanals 20 freie Kanten auf, an denen vorzugsweise Leitelemente 46, 47 zum gerichteten Leiten des Brühmediums 18 beim beidseitigen Überströmen der Trennwände 26, 27 in den Brühkanal 20 angeordnet sind. Die Gestaltung der Leitelemente 46, 47 ist variabel. In der gezeigten Ausführungsform sind die Leitelemente 46, 47 derart geformt, dass das Brühmedium 18 im Wesentlichen quer zur Transportrichtung T des Geflügels 11 in den Brühkanal 20 überströmt. In anderen Ausführungsformen können die Leitelemente 46, 47 auch anderweitig geformt und/oder gerichtet sein, beispielsweise derart, dass das überströmende Brühmedium 18 im Wesentlichen in Transportrichtung T in den Brühkanal gelenkt wird, insbesondere bei besonders hoher Transportgeschwindigkeit des Geflügels 11, um das Geflügel 11 zusätzlich in Transportrichtung T durch das im Brühkanal 20 befindliche Brühmedium 18 zu drücken. Die Trennwände 26, 27 können ausgehend von der Bodenwand 28, die die Trennwände 26, 27 verbindet, eine gleiche Höhe aufweisen. Bevorzugt weisen benachbarte, einen Brühkanalabschnitt begrenzende Trennwände 26, 27 unterschiedliche Höhen auf, derart, dass eine der Rückenseite des Geflügels 11 zugewandte Trennwand 27 niedriger ausgebildet ist als eine gegenüberliegende, der Brustseite des Geflügels 11 zugewandte Trennwand 26. Die unterschiedliche Höhe der Trennwände 26, 27 kann durchgängig entlang des gesamten Brühkanals 20, also entlang der linearen Transportstrecken 21 bis 23 und der gekrümmten Verbindungsstrecken 24, 25 ausgebildet sein. Die Höhendifferenz kann optional auch nur abschnittsweise ausgebildet sein. Hinsichtlich der Größe der Höhendifferenz kann die der Rückenseite zugewandte Trennwand 27 mindestens einen Zentimeter, optional auch mindestens zwei Zentimeter und weiter optional auch mindestens drei Zentimeter niedriger sein als die der Brustseite zugewandte Trennwand 26. Selbstverständlich kann die Differenz auch größer drei Zentimeter und kleiner ein Zentimeter sein. Es besteht weiterhin die Möglichkeit, dass entlang des Brühkanals 20 unterschiedliche Höhendifferenzen zwischen den Trennwänden 26, 27 vorgesehen sind, beispielsweis im Bereich der linearen Transportstrecken 21 bis 23 ein Zentimeter und im Bereich der gekrümmten Verbindungsstrecken 24, 25 drei Zentimeter. Besonders bevorzugt ist die Höhe mindestens einer der Trennwände 26, 27 jedes Brühkanalabschnitts variabel verstellbar ausgebildet. Dies kann z.B. eine mechanische und/oder motorische Verstellbarkeit der der Rückenseite zugewandten Trennwand 27 sein. Optional sind auch beide Trennwände 26, 27 in ihrer Höhe anpassbar.

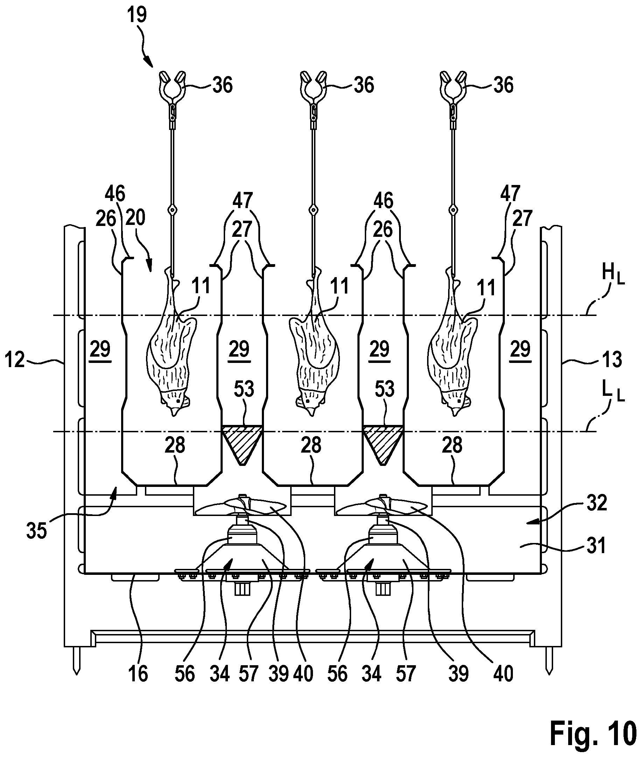

Die Trennwände 26, 27 können ausgehend von der Bodenwand 28 senkrecht nach oben und eben ausgebildet sein. Wie weiter oben beschrieben, weisen die Trennwände 26, 27 an ihren freien Kanten Leitelemente 46, 47 auf, die z.B. in Verlängerung der Trennwände 26, 27 (siehe insbesondere Figur 10) oder separat ausgebildet sind. Besonders bevorzugt weist mindestens eine der Trennwände 26, 27 eines Brühkanalabschnitts mindestens auf einer der Transportstrecke 21 bis 23 zugewandten Innenseite eine mindestens abschnittsweise an die Kontur des Geflügels 11 angepasste Form auf. Damit ist nicht zwangsläufig eine Abbildung der exakten Körperform des Geflügels 11 beschrieben. Vielmehr bezieht sich die Anpassung an die Kontur auf eine Gestaltung, die das Brühmedium 18 an die Positionen des Geflügels 11 leitet, an denen es insbesondere benötigt wird. In einer nicht dargestellten Ausführungsform ist z.B. nur die Innenseite der der Rückenseite zugewandte Trennwand 27 entsprechend ausgebildet. Bevorzugt sind jedoch beide Trennwände 26, 27 derart ausgebildet, dass der Brühkanal 20 partiell verengt ist. Dazu sind die Trennwände 26, 27 uneben ausgebildet und weisen ausgehend von den freien Kanten und einem zunächst senkrechten Verlauf zur Bodenwand 28 einen nach innen gerichteten Verlauf auf, der das Brühmedium 18 zunächst nach innen in Richtung des zu brühenden Geflügels 11 leitet, dann auf der Höhe des zu brühenden Geflügels 11 senkrecht zur Bodenwand 28 ausgerichtet ist, um den Brühkanal 20 zu verengen, um dann wieder nach außen gerichtet in die ursprüngliche Breite des Brühkanals 20 zu verlaufen, um abschließend wieder senkrecht zur Bodenwand 28 ausgerichtet zu enden. Andere Formgebungen und Konturverläufe der Trennwände 26, 27 sind ebenfalls einsetzbar. Auch eine Formgebung, die tatsächlich der äußeren Geometrie des zu brühenden Geflügels 11 angepasst ist, kann bei einer Trennwand 26 oder 27 oder bei beiden Trennwänden 26, 27 umgesetzt sein.

Der Brühtank 17 kann grundsätzlich in jeder Weise mit Brühmedium 18 befüllt werden. Optional ist eine Befüllung mittels dem Mittel 30 gewährleistet. Bevorzugt ist zum Einleiten des (frischen) Brühmediums 18 und zur Bildung eines entgegen der Transportrichtung T des Geflügels 11 gerichteten Gegenstroms im Ausgabebereich A des Geflügels 11 aus dem Brühtank 17 mindestens eine (nicht explizit dargestellte) Düseneinrichtung zum Einleiten von vorzugsweise erwärmtem, sauberem Wasser angeordnet, während im Eingabebereich E des Geflügels 11 in den Brühtank 17 mindestens ein (nicht explizit dargestellter) Auslass zum Ablassen des verschmutzten Wassers ausgebildet ist. Die Position der Düseneinrichtung und/oder des oder jedes Auslasses kann variieren und ist nicht auf Stirnwände 14, 15 des Brühtanks 17 beschränkt. Unabhängig von der Düseneinrichtung und dem Auslass zum Erzeugen des Gegenstroms und dem Ablassen mindestens von Teilen des zugeführten Wassers ist dem Brühtank 17 mindestens ein Ablassventil 48 zum Ablassen von Brühmedium 18 und/oder zum Verändern des Füllstandes des Brühtanks 17 zugeordnet. Die Anzahl und Positionierung der Ablassventile 48 kann variieren. Zum Reinigen des Brühmediums 18 ist optional eine nicht explizit dargestellte Filtereinrichtung vorgesehen, mittels der verschmutztes Brühmedium 18 aus dem Brühtank 17 entnommen und ggf. gereinigt zurückgeführt werden kann. Die Filtereinrichtung kann z.B. ein einfaches Sieb sein. In anderen Ausführungsformen kann diese z.B. auch Pumpen mit entsprechenden Filtern umfassen.

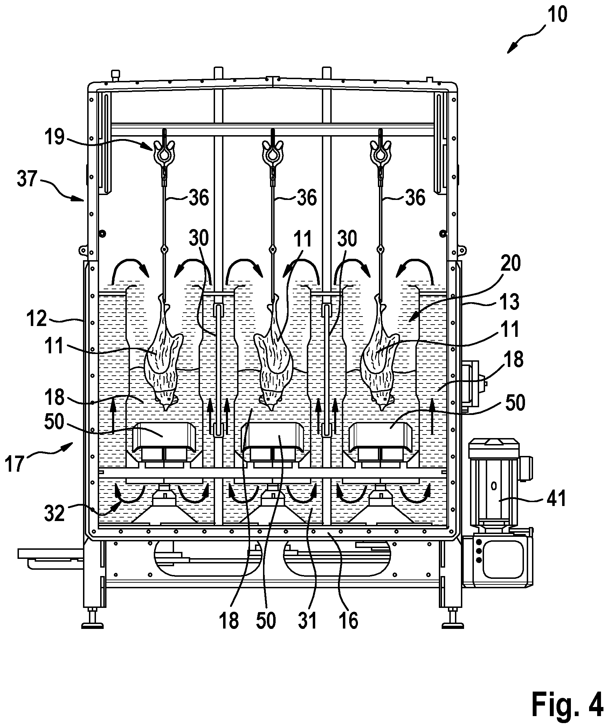

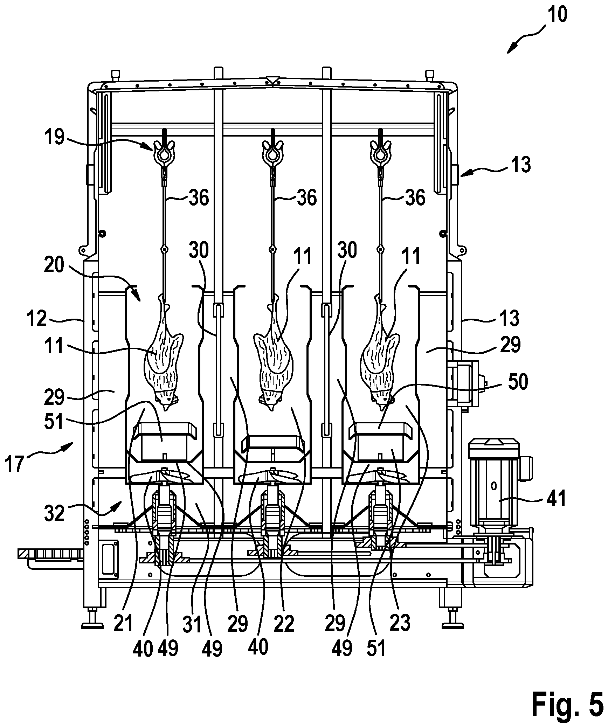

Weiter oben wurde bereits die Ausführungsform beschrieben, bei der die oder jede Pumpeneinrichtung 34 nur einer einzigen Transportstrecke 21 bis 23 zugeordnet ist. Dazu ist ein Flügelrad 40 jeder Pumpeneinrichtung 34 in einem Bereich eines Durchbruchs 49 der Bodenwand 28 des Brühkanalabschnitts zur Herstellung einer Strömungsverbindung zwischen einem Brühkanalabschnitt und dem Aufnahmeraum 31 angeordnet, wobei das Flügelrad 40 gegenüber dem Brühkanalabschnitt mindestens teilweise mit einer beabstandet zum Flügelrad 40 angeordneten und ausgebildeten Haube bzw. Abdeckung 50 abgeschirmt ist (siehe insbesondere Figuren 4 und 5). Die Abdeckung 50 kann verschiedene Ausbildungen aufweisen und umfasst mindestens eine Öffnung 51. Das in dem Brühkanal 20 befindliche Brühmedium 18 sowie das beidseitig über die Trennwände 26, 27 überströmende Brühmedium 18 werden im Bereich der Bodenwand 28 über die oder jede Öffnung 51 und den Durchbruch 49 aus dem Brühkanal 20 in den Aufnahmeraum 31 abgesaugt und über die Freiräume 29 von oben wieder in den Brühkanal 20 zurückgeführt, so dass eine Brühmediumzirkulation gewährleistet ist. Der zuvor geschilderte Gegenstrom aus Frischwasser vom Ausgabebereich A in Richtung Eingabebereich E ist ergänzend zu dieser Zirkulation einsetzbar.

Bei der Ausführungsform, bei der die oder jede Pumpeneinrichtung 34 mindestens zwei Transportstrecken 21 bis 23 zugeordnet ist, ist ein Flügelrad 40 jeder Pumpeneinrichtung 34 in einem Bereich eines Durchbruchs 52 jeweils einer Bodenwand 28 und/oder einer Trennwand 26 bzw. 27 von mindestens zwei Brühkanalabschnitten zur Herstellung einer Strömungsverbindung zwischen mindestens zwei benachbarten Brühkanalabschnitten und dem Aufnahmeraum 31 angeordnet, wobei das Flügelrad 40 gegenüber dem zwischen benachbarten Trennwänden 26, 27 benachbarter Brühkanalabschnitte gebildeten Freiraum 29 vollständig abgeschirmt ist. In der Ausführungsform insbesondere gemäß der Figuren 9 bis 11 ist zum Abschirmen gegenüber dem Freiraum 29 eine einfache Abdeckhaube 53 angeordnet bzw. ausgebildet. Das in dem Brühkanal 20 befindliche Brühmedium 18 sowie das beidseitig über die Trennwände 26, 27 überströmende Brühmedium 18 werden im Bereich der Bodenwand 28 und über die Trennwand 26 bzw. 27 über den Durchbruch 52 aus dem Brühkanal 20 in den Aufnahmeraum 31 abgesaugt und über die Freiräume 29 von oben wieder in den Brühkanal 20 zurückgeführt, so dass eine Brühmediumzirkulation gewährleistet ist. Der zuvor geschilderte Gegenstrom aus Frischwasser vom Ausgabebereich A in Richtung Eingabebereich E ist ergänzend zu dieser Zirkulation einsetzbar.

Alternativ oder bevorzugt zusätzlich zu der oder jeder zuvor beschriebenen Pumpeneinrichtung 34 ist entlang des Brühkanals 20 mindestens ein (nicht explizit dargestellter) Verwirbelungskörper als Mittel zur Erzeugung von Verwirbelung und/oder Strömung des Brühmediums 18 angeordnet, der mittels einer horizontal gerichteten und quer zur Transportrichtung T des Geflügels 11 gerichteten Antriebswelle rotierend antreibbar ist. Eine solche so genannte Vortex-Wasserturbine ist insbesondere im Bereich der gekrümmten Verbindungsstrecken 24, 25 angeordnet, letztlich aber an jeder Position entlang des Brühkanals 20 positionierbar.

Im Bereich der Seitenwände 12, 13 des Brühtanks 17 ist mindestens eine verschließbare Öffnung 54 zum Zugang in die Druckkammer 35, vorzugsweise im Bereich des Eingabebereichs E, ausgebildet. Die verschließbare Öffnung 54 ist z.B. eine Klappe oder Tür. Mehrere dieser Klappen/Türen können entlang der Seitenwände 12, 13 und selbstverständlich auch an den Stirnwänden 14, 15 ausgebildet sein.

Der Vorrichtung 10 ist eine Steuerungseinrichtung 55 mindestens zum Steuern und/oder Regeln der Mittel 30 zum Erwärmen des Brühmediums 18 zugeordnet. An die Steuerungseinrichtung können neben dem Mittel 30 auch weitere Komponenten, wie z.B. das oder jedes Ablassventil 48, die Düseneinheit, die Antriebe 41 der Pumpeneinrichtungen 34, potentielle Stellmotore z.B. zum Verändern der Höhe der oder jeder Trennwand 26, 27 sowie weitere Komponenten angeschlossen sein.

Wie weiter oben bereits beschrieben, kann der Brühtank 17 verschiedene Brühmediumstände aufweisen, beispielsweise einen Tiefstand ("low level") L_{L} und einen Höchststand ("high level") H_{L}. Im "low level" L_{L} befindet sich so wenig Brühmedium 18 im Brühtank 17, dass das Geflügel 11 frei und durch die Schwerkraft nach unten gerichtet oberhalb der Oberfläche des Brühmediums 18, das sich im Brühtank 17 insbesondere im Aufnahmeraum 31 unterhalb des Brühkanals 20 befindet, transportiert wird. Das Beaufschlagen des Geflügels 11 erfolgt dann ausschließlich durch das überströmende Brühmedium 18, das beidseitig über die gesamte Länge des Brühkanals 20 von oben in den Brühkanal 20 auf das Geflügel 11 trifft. Im "high level" H_{L} taucht das Geflügel 11 vollständig, insbesondere bis zu den Füßen, in das Brühmedium 18 ein, so dass das Geflügel 11 mit dem jeweils vollständigen Körper durch das Brühmedium 18 gezogen wird. Unabhängig davon kann auch beidseitig Brühmedium 18 von oben in den Brühkanal 20 überströmen. Das Brühmedium 18 kann auch jede Höhe zwischen "low level" L_{L} und "high level" H_{L} aufweisen, so dass das Geflügel 11 teilweise eingetaucht durch den Brühkanal 20 transportiert wird. Durch das Saugen mit der oder jeder Pumpeinrichtung 34 wird nicht nur das Brühmedium 18 aus dem Brühkanal 20 nach unten abgesaugt. Der Saugeffekt führt auch dazu, dass das Geflügel 11 aus der treibenden, aufgeschwemmten Position in eine im Wesentlichen nach unten hängende Position "gezogen" und damit stabilisiert wird. Das von oben überströmende Brühmedium 18 trifft dann auf gleichmäßig ausgerichtetes Geflügel 11 bzw. unterstützt die Ausrichtung des Geflügels 11 für einen effizienten Brühprozess.

Die Vorrichtung 10 ist nicht auf 180-Grad-Umlenkungen beschränkt. Es gibt selbstverständlich auch Ausführungsformen, in denen zwei oder mehr als zwei Transportstrecken 21 bis 23 z.B. mit einer 90-Grad-Umlenkung verbunden sind. Die erfindungsgemäße Umsetzung der beidseitigen Überströmung und der anderen Ausführungsformen für die 180-Grad-Umlenkung gilt in entsprechender Weise auch für die 90-Grad-Umlenkung und jede andere Umlenkung. Es besteht auch die Möglichkeit, dass in der oder jedem gekrümmten Brühkanalabschnitt eine Pumpeneinrichtung 34 angeordnet ist.

Die oder jede Pumpeneinrichtung 34 ist für das Absaugen des Brühmediums 18 aus dem Brühkanal 20 und das Zurückpumpen des Brühmediums 18 über die Freiräume 29 zurück in den Brühkanal 20 im Aufnahmeraum 31 angeordnet, wodurch sie permanent im Brühmedium 18 steht und dieses auf den Pumpenkörper 38 wirkt. Die vertikal gerichtete Antriebswelle 39 ist in einer Lagerhülse 56 gelagert, die über eine konische Abdeckung 57 durch die Bodenwand 16 des Brühtanks 17 hindurchgeführt und mit dieser verbunden ist. Die Antriebswelle 39 ist gegenüber der Lagerhülse 56 im Austrittsbereich der Antriebswelle 39 aus der Lagerhülse 56 mit einer ersten Dichtung 58 gedichtet. Des Weiteren ist optional eine zusätzliche Labyrinthdichtung 59 vorgesehen, die ausgehend vom Flügelrad 40 innerhalb der Lagerhülse 56 hinter der Dichtung 58 liegt und Lagerringe 60, 61 gegen eindringendes Wasser schützt. Etwa auf der Höhe der Labyrinthdichtung 59 ist in der Lagerhülse 56 eine Öffnung 62 vorgesehen, die in die Lagerhülse 56 eindringendes Wasser noch vor Erreichen der Labyrinthdichtung 59 und der Lagerringe 60, 61 aus der Lagerhülse 56 herausführt. Andere Ausführungen hinsichtlich der Lagerung und/oder der Befestigung des Pumpenkörpers 38 und der Antriebswelle 39 sind aber ebenfalls möglich.

Im Folgenden wird das Verfahren anhand der Zeichnung näher erläutert.

Die Erfindung betrifft Verfahren zum Brühen von geschlachtetem Geflügel 11. Dazu wird das Geflügel 11 an den Füßen (an den Beinen ist synonym zu verstehen) hängend durch einen mit flüssigem Brühmedium 18 mindestens teilweise gefüllten Brühtank 17 mittels eines Transportmittels 19 in Transportrichtung T von einem Eingabebereich E zu einem Ausgabebereich A entlang eines lineare und gekrümmte Brühkanalabschnitte umfassenden Brühkanals 20 transportiert. Dem Brühtank 20 wird erwärmtes Brühmedium 18 zugeführt und oder vorhandenes Brühmedium 18 wird erwärmt durch Mittel 30 zum Erwärmen und/oder Zuführen des Brühmediums 18. Das Brühmedium 18 wird innerhalb des Brühtanks 20 mittels mindestens eines Verwirbelungskörpers 33 verwirbelt, wodurch das Brühmedium 18 aus einem Aufnahmeraum 31 unterhalb des Brühkanals 20 abschnittsweise von oben zurück in den Brühkanal 20 geleitet wird. Durch den Transport des Geflügel 11 entlang des Brühkanals 20 wird der Brühprozess ausgeführt.

Dieses Verfahren zeichnet sich erfindungsgemäß dadurch aus, dass das Brühmedium 18 mittels mindestens einer Pumpeneinrichtung 34 von unten aus dem Brühkanal 20 gesaugt und über die gesamte Länge des Brühkanals 20, also im Bereich der linearen und der gekrümmten Brühkanalabschnitte, zu beiden Seiten desselben von oben zurück in den Brühkanal 20 gepumpt wird. Das Brühmedium 18 strömt also zu beiden Seiten entlang der Transportstrecken 21 bis 23 und der Verbindungsstrecken 24, 25 von oben in den Brühkanal 20 und trifft gleichmäßig auf das hängende und vorzugsweise kontinuierlich transportierte Geflügel 11.Bei einem Füllstand "low level" L_{L} erfolgt das Brühen des Geflügels 11 ausschließlich über das zu beiden Seiten überströmende Brühmedium 18. Bei einem Füllstand zwischen "low level" L_{L} und "high level" H_{L} sowie bei einem Füllstand "high level" H_{L} erfolgt das Brühen kombiniert durch das in dem Brühkanal 20 stehende Brühmedium 18 und das zu beiden Seiten entlang der Transportstrecken 21 bis 23 und der Verbindungsstrecken 24, 25 von oben in den Brühkanal 20 strömende Brühmedium 18.

Vorzugsweise wird das Geflügel 11 seitlich durch den aus einander gegenüberliegenden Trennwänden 26, 27 begrenzten Brühkanal 20 transportiert, derart, dass das Geflügel 11 beim Transportieren mit einer Rückenseite zu einer Trennwand 27 und mit einer Brustseite zu der gegenüberliegenden Trennwand 26 gerichtet ist, wobei über die Trennwand 27, die der Rückenseite zugewandt ist, ein größeres Brühmediumvolumen von oben zurück in den Brühkanal 20 zurückgeführt wird als über die Trennwand 26, die der Brustseite zugewandt ist. Diese Option besteht sowohl für die linearen Transportstrecken 21 bis 23 als auch für die gekrümmten Verbindungsstrecken 24, 25. Neben dem intern zirkulierenden Brühmedium 18 besteht weiterhin die Möglichkeit, zusätzlich ausgehend vom Ausgabebereich A in Richtung des Eingabebereichs E Frischwasser zur Erzeugung eines Gegenstroms entgegen der Transportrichtung T des Geflügels 11 zuzuführen, so dass das Geflügel 11 gegen den Strom des Frischwassers transportiert wird und sich verschmutztes Brühmedium 18 im Eingabebereich E sammelt und das Geflügel 11 in Richtung des Ausgabebereiches A durch zunehmend sauberes Brühmedium 18 transportiert wird. Das Brühmedium 18 kann teilweise oder vollständig während des Brühprozesses oder in einer Betriebsunterbrechung mittels einer Filtereinrichtung gereinigt werden.

Zum internen Zirkulieren des Brühmediums 18 wird dieses aus dem Brühkanal 20 gesaugt und als beidseitiger Überstrom in den Brühkanal 20 zurückgeführt. Dazu wird Brühmedium 18 im Bereich von Bodenwänden 28 mit mehreren Pumpeinrichtungen 34 aus dem Brühkanal 20 gesaugt und zu beiden Seiten des Brühkanals 20 - durch Freiräume 29 - nach oben gepumpt, so dass es zu beiden Seiten von oben zurück in den Brühkanal 20 strömt, wobei jeweils mindestens eine Pumpeneinrichtung 34 wahlweise einen Brühkanalabschnitt oder mindestens zwei Brühkanalabschnitte versorgt. Um zusätzlich einen "True Counterflow" in den Brühtank 17 einzubringen, wird vorzugsweise vorerwärmtes Frischwasser im Ausgabebereich A entgegen der Transportrichtung T mit Druck in den Brühkanal 20 gepumpt. Das im Ausgabebereich A mittels eines (Frisch-)Wasserzugangs zugeführte Frischwasser fließt/strömt abwärts in Richtung des tiefer gelegenen (Schmutz-)Wasseraustritts.

Letztlich besteht auch die Option, dass das überströmende Brühmedium 18, das von oben über die freien Kanten der Trennwände 26, 27 in den Brühlanal 20 strömt, nicht nur quer zur Transportrichtung T in den Brühkanal 20 geleitet wird, sondern insbesondere auch in Transportrichtung T des Geflügels 11. Dazu sind Leitelemente 46, 47 entsprechend geformt und/oder angeordnet, um das Brühmedium 18 individuell und letztlich von allen Seiten bzw. in alle Richtungen in den Brühkanal 20 zu lenken.

Eine bevorzugte Einstellung der Pumpeneinrichtung 34 hinsichtlich der Antriebsgeschwindigkeit der Flügelräder 40 bei einem Füllstand des Brühtanks 17 mit Brühmedium 18 zwischen dem "low level" L_{L} und einem Füllstand zwischen "low level" L_{L} und "high level" H_{L} beträgt ca. 900 U/min. Bei einem Füllstand "high level" H_{L} ist eine Antriebsgeschwindigkeit der Flügelräder von ca. 540 U/min bevorzugt (siehe insbesondere Figur 10). Selbstverständlich können auch andere Antriebsgeschwindigkeiten umgesetzt werden.

Besonders bevorzugt wird das Verfahren mit einer Vorrichtung nach einem oder mehreren der Ansprüche 1 bis 17 ausgeführt wird, wie sie vorstehend beschrieben ist.

## Patentansprüche

1. Vorrichtung (10), ausgebildet und eingerichtet zum Brühen von geschlachtetem Geflügel (11), umfassend einen länglichen, seitlich umlaufend mit Seitenwänden (12, 13) und Stirnwänden (14, 15) und nach unten mit einer Bodenwand (16) geschlossenen und nach oben offenen Brühtank (17) zum Aufnehmen und zum Halten eines flüssigen Brühmediums (18), ein oberhalb des Brühtanks (17) angeordnetes Transportmittel (19) zum hängenden Transportieren des Geflügels (11) innerhalb des Brühtanks (17) entlang eines aus mehreren Brühkanalabschnitten gebildeten Brühkanals (20) von einem Eingabebereich (E) zu einem Ausgabebereich (A), wobei innerhalb des Brühtanks (17) mindestens zwei Transportstrecken (21, 22, 23) für das Geflügel (11) jeweils von einer Stirnseite des Brühtanks (17) zur gegenüberliegenden Stirnseite des Brühtanks (17) ausgebildet sind und die Transportstrecken (21, 22, 23) mittels gekrümmter Verbindungsstrecken (24, 25) zur 180-Grad-Umlenkung miteinander verbunden sind, wobei jede Transportstrecke (21 bis 23) und jede Verbindungsstrecke (24, 25) durch zwei quer zur Transportrichtung T beabstandet zueinander angeordnete Trennwände (26, 27) und eine Bodenwand (28) zur Bildung nach oben offener linearer Brühkanalabschnitte und nach oben offener gekrümmter Brühkanalabschnitte begrenzt ist, wobei Trennwände (26, 27) benachbarter Brühkanalabschnitte sowie Trennwände (26, 27), die benachbart zu Außenwänden des Brühtanks (17) liegen, beabstandet zueinander zur Bildung eines Freiraums (29) für das Brühmedium (18) angeordnet sind, wobei mindestens den Freiräumen (29) benachbarter Brühkanalabschnitte Mittel (30) zum Zuführen und/oder Erwärmen des Brühmediums (18) zugeordnet sind, und wobei unterhalb mindestens von Teilen des Brühkanals (20), nämlich mindestens zwischen den Bodenwänden (28) der linearen Brühkanalabschnitte und der Bodenwand (16) des Brühtanks (17) ein Aufnahmeraum (31) für Brühmedium (18) gebildet ist, der zusammen mit den Freiräumen (29) eine gemeinsame Kammer (32) bildet, der mindestens ein Verwirbelungskörper (33) zur Erzeugung von Verwirbelung und/oder Strömung des Brühmediums (18) im Brühtank (20) zugeordnet ist, **dadurch gekennzeichnet, dass** sich der Aufnahmeraum (31) unterhalb des gesamten Brühkanals (20) erstreckt, also zwischen den Bodenwänden (28) der linearen und der gekrümmten Brühkanalabschnitte einerseits und der Bodenwand (16) des Brühtanks (17) andererseits, wobei in dem sich dadurch bis in den Bereich der gekrümmten Brühkanalabschnitte erstreckenden Aufnahmeraum (31) mindestens eine Pumpeneinrichtung (34) als Verwirbelungskörper (33) zur Bildung einer entlang des gesamten Brühkanals (20) wirkenden Druckkammer (35) angeordnet ist.

2. Vorrichtung (10) nach Anspruch 1, **dadurch gekennzeichnet, dass** entlang jeder Transportstrecke (21 bis 23) mindestens zwei Pumpeneinrichtungen (34) angeordnet sind und jede Pumpeneinrichtung (34) einen Pumpenkörper (38) mit einer vertikal gerichteten Antriebswelle (39) mit einem rotierend antreibbaren Flügelrad (40) sowie einen Antrieb (41) umfasst, wobei mindestens das Flügelrad (40) im Bereich der Bodenwand (28) des oder jedes Brühkanalabschnitts innerhalb des Brühtanks (17) und der Antrieb (41) außerhalb des Brühtanks (17) angeordnet ist.

3. Vorrichtung (10) nach Anspruch 1 oder 2, **dadurch gekennzeichnet, dass** jedem linearen Brühkanalabschnitt mindestens eine separate Pumpeneinrichtung (34) zugeordnet ist.

4. Vorrichtung (10) nach einem oder mehreren der Ansprüche 1 bis 3, **dadurch gekennzeichnet, dass** mindestens zwei benachbart und parallel zueinander verlaufenden Brühkanalabschnitten mindestens eine gemeinsame Pumpeneinrichtung (34) zugeordnet ist.

5. Vorrichtung (10) nach einem oder mehreren der Ansprüche 1 bis 4, **dadurch gekennzeichnet, dass** quer zur Längserstreckung der linearen Brühkanalabschnitte mindestens eine Reihe, vorzugsweise zwei Reihen, aus Pumpeneinrichtungen (34) ausgebildet und angeordnet ist/sind, wobei der maximale Abstand der Pumpeneinrichtungen (34) zu den gekrümmten Brühkanalabschnitten ca. 3,5m beträgt.

6. Vorrichtung (10) nach Anspruch 5, **dadurch gekennzeichnet, dass** zwei oder mehr Pumpeneinrichtungen (34) einer Reihe ein Pumpenmodul (42) bilden, das zusammen mit Mittelmodulen (43) mit linearen Brühkanalabschnittteilen und Endmodulen (44) mit linearen Brühkanalabschnittteilen und gekrümmten Brühkanalabschnitten eine modular aufgebaute Vorrichtung (10) mit dem durchgängigen Brühkanal (20) bildet.

7. Vorrichtung (10) nach einem oder mehreren der Ansprüche 1 bis 6, **dadurch gekennzeichnet, dass** benachbarte, einen Brühkanalabschnitt begrenzende Trennwände (26, 27) unterschiedliche Höhen aufweisen, derart, dass eine der Rückenseite des Geflügels (11) zugewandte Trennwand (27) niedriger ausgebildet ist als eine gegenüberliegende, der Brustseite des Geflügels (11) zugewandte Trennwand (26).

8. Vorrichtung (10) nach Anspruch 7, **dadurch gekennzeichnet, dass** die der Rückenseite zugewandte Trennwand (27) mindestens einen Zentimeter, optional auch mindestens zwei Zentimeter und weiter optional auch mindestens drei Zentimeter niedriger ist als die der Brustseite zugewandte Trennwand (26).

9. Vorrichtung (10) nach einem oder mehreren der Ansprüche 1 bis 8, **dadurch gekennzeichnet, dass** die Höhe mindestens einer der Trennwände (26, 27) jedes Brühkanalabschnitts variabel verstellbar ausgebildet ist.

10. Vorrichtung (10) nach einem oder mehreren der Ansprüche 1 bis 9, **dadurch gekennzeichnet, dass** mindestens eine der Trennwände (26, 27) eines Brühkanalabschnitts mindestens auf einer der Transportstrecke (21 bis 23) zugewandten Innenseite eine mindestens abschnittsweise an die Kontur des Geflügels (11) angepasste Form aufweist.

11. Vorrichtung (10) nach einem oder mehreren der Ansprüche 1 bis 10, **dadurch gekennzeichnet, dass** zur Bildung eines entgegen der Transportrichtung des Geflügels (11) gerichteten Gegenstroms im Ausgabebereich (A) des Geflügels aus dem Brühtank (17) mindestens eine Düseneinrichtung zum Einleiten von vorzugsweise erwärmtem, sauberem Wasser angeordnet ist, während im Eingabebereich (E) des Geflügels (11) in den Brühtank (17) mindestens ein Auslass zum Ablassen des verschmutzten Wassers ausgebildet ist.

12. Vorrichtung (10) nach einem oder mehreren der Ansprüche 3 und 5 bis 11, **dadurch gekennzeichnet, dass** ein Flügelrad (40) jeder Pumpeneinrichtung (34) in einem Bereich eines Durchbruchs (49) der Bodenwand (28) des Brühkanalabschnitts zur Herstellung einer Strömungsverbindung zwischen einem Brühkanalabschnitt und dem Aufnahmeraum (31) angeordnet ist, wobei das Flügelrad (40) gegenüber dem Brühkanalabschnitt mindestens teilweise mit einer beabstandet zum Flügelrad (40) angeordneten und ausgebildeten Abdeckung (50) abgeschirmt ist.

13. Vorrichtung (10) nach einem oder mehreren der Ansprüche 4 bis 11, **dadurch gekennzeichnet, dass** ein Flügelrad (40) jeder Pumpeneinrichtung (34) in einem Bereich eines Durchbruchs (52) jeweils einer Bodenwand (28) und/oder einer Trennwand (26, 27) von mindestens zwei Brühkanalabschnitten zur Herstellung einer Strömungsverbindung zwischen mindestens zwei benachbarten Brühkanalabschnitten und dem Aufnahmeraum (31) angeordnet ist, wobei das Flügelrad (40) gegenüber dem zwischen benachbarten Trennwänden (26, 27) benachbarter Brühkanalabschnitte gebildeten Freiraum (29) vollständig abgeschirmt ist.

14. Vorrichtung (10) nach einem oder mehreren der Ansprüche 1 bis 13, **dadurch gekennzeichnet, dass** entlang des Brühkanals (20) mindestens ein Verwirbelungskörper als Mittel zur Erzeugung von Verwirbelung und/oder Strömung des Brühmediums (18) angeordnet ist, der mittels einer horizontal gerichteten und quer zur Transportrichtung T des Geflügels (11) gerichteten Antriebswelle rotierend antreibbar ist.

15. Vorrichtung (10) nach einem oder mehreren der Ansprüche 1 bis 14, **dadurch gekennzeichnet, dass** im Bereich der Seitenwände (12, 13) des Brühtanks (17) mindestens eine verschließbare Öffnung (54) zum Zugang in die Druckkammer (35), vorzugsweise im Bereich des Eingabebereichs (E), ausgebildet ist.

16. Vorrichtung (10) nach einem oder mehreren der Ansprüche 1 bis 15, **dadurch gekennzeichnet, dass** dem Brühtank (17) mindestens ein Ablassventil (48) zugeordnet ist.

17. Vorrichtung (10) nach einem oder mehreren der Ansprüche 1 bis 16, **dadurch gekennzeichnet, dass** der Vorrichtung (10) eine Steuerungseinrichtung mindestens zum Steuern und/oder Regeln der Mittel (30) zum Erwärmen des Brühmediums (18) zugeordnet ist.

18. Verfahren zum Brühen von geschlachtetem Geflügel (11), umfassend die Schritte:
- Transportieren des Geflügels (11) an den Füßen hängend durch einen mit flüssigem Brühmedium (18) mindestens teilweise gefüllten Brühtank (17) mittels eines Transportmittels (19) in Transportrichtung T von einem Eingabebereich (E) zu einem Ausgabebereich (A) entlang eines Brühkanals (20), wobei der Brühkanal (20) lineare und gekrümmte Brühkanalabschnitte umfasst,
- Erwärmen und/oder Zuführen des Brühmediums (18) durch Mittel (30) zum Erwärmen und/oder Zuführen des Brühmediums (18), und
- Verwirbeln des Brühmediums (18) innerhalb des Brühtanks (17) mittels mindestens eines Verwirbelungskörpers (33), wodurch das Brühmedium (18) aus einem Aufnahmeraum (31) unterhalb des Brühkanals (20) abschnittsweise von oben zurück in den Brühkanal (20) geleitet wird,
**dadurch gekennzeichnet, dass** das Brühmedium (18) mittels mindestens einer Pumpeneinrichtung (34) von unten aus dem Brühkanal (20) gesaugt und über die gesamte Länge des Brühkanals (20), also im Bereich der linearen und der gekrümmten Brühkanalabschnitte, zu beiden Seiten desselben von oben zurück in den Brühkanal (20) gepumpt wird.

19. Verfahren nach Anspruch 18, **dadurch gekennzeichnet, dass** das Geflügel (11) seitlich durch den aus einander gegenüberliegenden Trennwänden (26, 27) begrenzten Brühkanal (20) transportiert wird, derart, dass das Geflügel (11) beim Transportieren mit einer Rückenseite zu einer Trennwand (27) und mit einer Brustseite zu der gegenüberliegenden Trennwand (26) gerichtet ist, wobei über die Trennwand (27), die der Rückenseite zugewandt ist, ein größeres Brühmediumvolumen von oben zurück in den Brühkanal (20) zurückgeführt wird als über die Trennwand (26), die der Brustseite zugewandt ist.

20. Verfahren nach Anspruch 18 oder 19, **dadurch gekennzeichnet, dass** ausgehend vom Ausgabebereich (A) in Richtung des Eingabebereichs (E) Frischwasser zur Erzeugung eines Gegenstroms entgegen der Transportrichtung T des Geflügels (11) zugeführt wird, so dass das Geflügel (11) gegen den Strom des Frischwassers transportiert wird und sich verschmutztes Brühmedium (18) im Eingabebereich (E) sammelt und das Geflügel (11) in Richtung des Ausgabebereiches (A) durch zunehmend sauberes Brühmedium (18) transportiert wird.

21. Verfahren nach einem oder mehreren der Ansprüche 18 bis 20, **dadurch gekennzeichnet, dass** das Geflügel (11) beim Transportieren durch den Brühkanal (20) wahlweise vollständig, teilweise oder gar nicht in das Brühmedium (18) eintaucht.

22. Verfahren nach einem oder mehreren der Ansprüche 18 bis 21, **dadurch gekennzeichnet, dass** das Brühmedium (18) mittels einer Filtereinrichtung gereinigt wird.

23. Verfahren nach einem oder mehreren der Ansprüche 18 bis 22, **dadurch gekennzeichnet, dass** das Brühmedium (18) selbst innerhalb des Brühtanks (17) zirkuliert, nämlich aus dem Brühkanal (20) gesaugt und als beidseitiger Überstrom in den Brühkanal (20) zurückgeführt wird, und vorerwärmtes Frischwasser im Ausgabebereich (A) entgegen der Transportrichtung T mit Druck in den Brühkanal (20) gepumpt wird.

24. Verfahren nach einem oder mehreren der Ansprüche 18 bis 23, **dadurch gekennzeichnet, dass** das Brühmedium (18) im Bereich von Bodenwänden (28) mit mehreren Pumpeinrichtungen (34) aus dem Brühkanal (20) gesaugt und zu beiden Seiten des Brühkanals (20) nach oben gepumpt wird, so dass es zu beiden Seiten von oben zurück in den Brühkanal (20) strömt, wobei jeweils mindestens eine Pumpeneinrichtung (34) wahlweise einen Brühkanalabschnitt oder mindestens zwei Brühkanalabschnitte versorgt.

25. Verfahren nach einem oder mehreren der Ansprüche 18 bis 24, **dadurch gekennzeichnet, dass** es mit einer Vorrichtung (10) nach einem oder mehreren der Ansprüche 1 bis 17 ausgeführt wird.

## Claims

1. Apparatus (10), configured and adapted for scalding slaughtered poultry (11), comprising an elongate scalding tank (17), which is closed on all sides by side walls (12, 13) and end walls (14, 15) and at the bottom by a base wall (16) and which is open at the top, for receiving and for holding a liquid scalding medium (18), a transport means (19), arranged above the scalding tank (17), for transporting the poultry (11) in a hanging manner within the scalding tank (17) along a scalding channel (20) formed of a plurality of scalding channel sections from an input region (E) to an output region (A), wherein at least two transport lines (21, 22, 23) for the poultry (11) are formed within the scalding tank (17), each from one end wall of the scalding tank (17) to the opposite end wall of the scalding tank (17), and the transport lines (21, 22, 23) are connected to one another by means of curved connecting lines (24, 25) for 180-degree deflection, wherein each transport line (21 to 23) and each connecting line (24, 25) is delimited by two partition walls (26, 27), which are arranged spaced apart from one another transversely to the transport direction T, and a base wall (28) to form linear scalding channel sections which are open at the top and curved scalding channel sections which are open at the top, wherein partition walls (26, 27) of adjacent scalding channel sections and partition walls (26, 27) that are situated adjacent to outside walls of the scalding tank (17) are arranged spaced apart from one another to form a free space (29) for the scalding medium (18), wherein means (30) for supplying and/or warming the scalding medium (18) are associated at least with the free spaces (29) of adjacent scalding channel sections, and wherein there is formed beneath at least parts of the scalding channel (20), namely at least between the base walls (28) of the linear scalding channel sections and the base wall (16) of the scalding tank (17), a receiving compartment (31) for scalding medium (18) which, together with the free spaces (29), forms a common chamber (32) with which there is associated at least one turbulence-generating body (33) for generating turbulence and/or flow of the scalding medium (18) in the scalding tank (20), **characterised in that** the receiving compartment (31) extends beneath the entire scalding channel (20), that is to say between the base walls (28) of the linear and of the curved scalding channel sections on the one hand and the base wall (16) of the scalding tank (17) on the other hand, wherein there is arranged in the receiving compartment (31), which as a result extends into the region of the curved scalding channel sections, at least one pump device (34) as a turbulence-generating body (33) for forming a pressure chamber (35) which acts along the entire scalding channel (20).

2. Apparatus (10) according to claim 1, **characterised in that** at least two pump devices (34) are arranged along each transport line (21 to 23) and each pump device (34) comprises a pump body (38) having a vertically oriented drive shaft (39) with a rotationally driveable turbine (40) and a drive (41), wherein at least the turbine (40) in the region of the base wall (28) of the or each scalding channel section is arranged inside the scalding tank (17) and the drive (41) is arranged outside the scalding tank (17).

3. Apparatus (10) according to claim 1 or 2, **characterised in that** at least one separate pump device (34) is associated with each linear scalding channel section.

4. Apparatus (10) according to one or more of claims 1 to 3, **characterised in that** at least one common pump device (34) is associated with at least two scalding channel sections running adjacent and parallel to one another.

5. Apparatus (10) according to one or more of claims 1 to 4, **characterised in that** at least one row, preferably two rows, of pump devices (34) is/are formed and arranged transversely to the longitudinal extent of the linear scalding channel sections, wherein the maximum distance of the pump devices (34) from the curved scalding channel sections is about 3.5 m.

6. Apparatus (10) according to claim 5, **characterised in that** two or more pump devices (34) of a row form a pump unit (42) which, together with centre units (43) with linear scalding channel section portions and end units (44) with linear scalding channel section portions and curved scalding channel section portions, forms an apparatus (10) of modular construction having the continuous scalding channel (20) throughout.

7. Apparatus (10) according to one or more of claims 1 to 6, **characterised in that** adjacent partition walls (26, 27) delimiting a scalding channel section have different heights, such that a partition wall (27) facing the dorsal side of the poultry (11) is lower than an opposite partition wall (26) facing the breast side of the poultry (11).

8. Apparatus (10) according to claim 7, **characterised in that** the partition wall (27) facing the dorsal side is at least one centimetre, optionally also at least two centimetres and further optionally also at least three centimetres lower than the partition wall (26) facing the breast side.

9. Apparatus (10) according to one or more of claims 1 to 8, **characterised in that** the height of at least one of the partition walls (26, 27) of each scalding channel section is configured so as to be variably adjustable.

10. Apparatus (10) according to one or more of claims 1 to 9, **characterised in that** at least one of the partition walls (26, 27) of a scalding channel section has, at least on an inner side facing the transport line (21 to 23), a shape which is adapted at least in some regions to the contour of the poultry (11).

11. Apparatus (10) according to one or more of claims 1 to 10, **characterised in that**, in order to form a counterflow oriented contrary to the transport direction of the poultry (11), there is arranged in the output region (A) of the poultry from the scalding tank (17) at least one nozzle device for introducing clean, preferably warmed water, while in the input region (E) of the poultry (11) into the scalding tank (17) there is formed at least one outlet for discharging the contaminated water.

12. Apparatus (10) according to one or more of claims 3 and 5 to 11, **characterised in that** a turbine (40) of each pump device (34) is arranged in a region of a breakthrough (49) of the base wall (28) of the scalding channel section in order to establish a flow connection between a scalding channel section and the receiving compartment (31), wherein the turbine (40) is shielded at least partially with respect to the scalding channel section by a cover (50) which is arranged and formed spaced apart from the turbine (40).

13. Apparatus (10) according to one or more of claims 4 to 11, **characterised in that** a turbine (40) of each pump device (34) is arranged in a region of a breakthrough (52) of a base wall (28) and/or partition wall (26, 27) of at least two scalding channel sections in order to establish a flow connection between at least two adjacent scalding channel sections and the receiving compartment (31), wherein the turbine (40) is shielded completely with respect to the free space (29) formed between adjacent partition walls (26, 27) of adjacent scalding channel sections.

14. Apparatus (10) according to one or more of claims 1 to 13, **characterised in that** there is arranged along the scalding channel (20) at least one turbulence-generating body as the means for generating turbulence and/or flow of the scalding medium (18), which turbulence-generating body can be driven in rotation by means of a drive shaft which is oriented horizontally and is oriented transversely to the transport direction T of the poultry (11).

15. Apparatus (10) according to one or more of claims 1 to 14, **characterised in that** at least one closable opening (54) for accessing the pressure chamber (35) is formed in the region of the side walls (12, 13) of the scalding tank (17), preferably in the region of the input region (E).

16. Apparatus (10) according to one or more of claims 1 to 15, **characterised in that** at least one outlet valve (48) is associated with the scalding tank (17).

17. Apparatus (10) according to one or more of claims 1 to 16, **characterised in that** a control device at least for controlling and/or regulating the means (30) for warming the scalding medium (18) is associated with the apparatus (10).

18. Method for scalding slaughtered poultry (11), comprising the steps:
- transporting the poultry (11), hanging by the feet, through a scalding tank (17), which is at least partially filled with liquid scalding medium (18), by means of a transport means (19) in a transport direction T from an input region (E) to an output region (A) along a scalding channel (20), wherein the scalding channel (20) comprises linear and curved scalding channel sections,
- warming and/or supplying the scalding medium (18) by means of means (30) for warming and/or supplying the scalding medium (18), and
- generating turbulence in the scalding medium (18) within the scalding tank (17) by means of at least one turbulence-generating body (33), whereby the scalding medium (18) is guided from a receiving compartment (31) beneath the scalding channel (20) in some regions back into the scalding channel (20) from above,
**characterised in that** the scalding medium (18), by means of at least one pump device (34), is drawn by suction out of the scalding channel (20) from beneath and pumped back into the scalding channel (20) on both sides thereof from above over the entire length of the scalding channel (20), that is to say in the region of the linear and of the curved scalding channel sections.

19. Method according to claim 18, **characterised in that** the poultry (11) is transported sideways through the scalding channel (20) delimited by mutually opposite partition walls (26, 27), such that the poultry (11), as it is transported, is oriented with a dorsal side facing one partition wall (27) and with a breast side facing the opposite partition wall (26), wherein a larger volume of scalding medium is fed back into the scalding channel (20) from above over the partition wall (27) facing the dorsal side than over the partition wall (26) facing the breast side.

20. Method according to claim 18 or 19, **characterised in that** fresh water is supplied, starting from the output region (A) in the direction towards the input region (E), in order to generate a counterflow contrary to the transport direction T of the poultry (11), so that the poultry (11) is transported against the flow of the fresh water and contaminated scalding medium (18) collects in the input region (E) and the poultry (11) is transported in the direction towards the output region (A) through increasingly clean scalding medium (18).

21. Method according to one or more of claims 18 to 20, **characterised in that**, as the poultry (11) is transported through the scalding channel (20), it is immersed in the scalding medium (18) either completely, partially or not at all.

22. Method according to one or more of claims 18 to 21, **characterised in that** the scalding medium (18) is cleaned by means of a filter device.

23. Method according to one or more of claims 18 to 22, **characterised in that** the scalding medium (18) itself circulates within the scalding tank (17), namely is drawn by suction out of the scalding channel (20) and fed back into the scalding channel (20) as an overflow on both sides, and prewarmed fresh water is pumped under pressure into the scalding channel (20) in the output region (A) contrary to the transport direction T.

24. Method according to one or more of claims 18 to 23, **characterised in that** the scalding medium (18), by means of a plurality of pump devices (34), is drawn by suction out of the scalding channel (20) in the region of base walls (28) and pumped upwards on both sides of the scalding channel (20), so that it flows back into the scalding channel (20) from above on both sides, wherein at least one pump device (34) serves either one scalding channel section or at least two scalding channel sections.

25. Method according to one or more of claims 18 to 24, **characterised in that** it is carried out with an apparatus (10) according to one or more of claims 1 to 17.

## Revendications

1. Dispositif (10), configuré et adapté pour l'échaudage de volailles abattues (11), comprenant un réservoir d'échaudage (17) allongé, fermé latéralement sur tout le pourtour par des parois latérales (12, 13) et des parois frontales (14, 15) et vers le bas par une paroi de fond (16) et ouvert vers le haut, destiné à recevoir et à contenir un milieu d'échaudage liquide (18), un moyen de transport (19) agencé au-dessus du réservoir d'échaudage (17) pour le transport suspendu de la volaille (11) à l'intérieur du réservoir d'échaudage (17) le long d'un canal d'échaudage (20) formé de plusieurs sections de canal d'échaudage, depuis une zone d'entrée (E) vers une zone de sortie (A), au moins deux trajets de transport (21, 22, 23) pour la volaille (11) à l'intérieur du réservoir d'échaudage (17) étant configurés respectivement d'un côté frontal du réservoir d'échaudage (17) au côté frontal opposé du réservoir d'échaudage (17) et les trajets de transport (21, 22, 23) étant reliés entre eux au moyen de trajets de liaison courbes (24, 25) pour une déviation de 180 degrés, chaque trajet de transport (21 à 23) et chaque trajet de liaison (24, 25) étant délimités par deux parois de séparation (26, 27) agencées à distance l'une de l'autre transversalement à la direction de transport T et par une paroi de fond (28) pour former des sections de canal d'échaudage linéaires ouvertes vers le haut et des sections de canal d'échaudage courbes ouvertes vers le haut, des parois de séparation (26, 27) de sections de canal d'échaudage voisines ainsi que des parois de séparation (26, 27) qui sont voisines de parois extérieures du réservoir d'échaudage (17) étant agencées à distance les unes des autres pour former un espace libre (29) pour le milieu d'échaudage (18), des moyens (30) pour amener et/ou chauffer le milieu d'échaudage (18) étant associés au moins aux espaces libres (29) de sections de canal d'échaudage voisines, et un espace de réception (31) pour le milieu d'échaudage (18) étant formé en dessous d'au moins des parties du canal d'échaudage (20), à savoir au moins entre les parois de fond (28) des sections de canal d'échaudage linéaires et la paroi de fond (16) du réservoir d'échaudage (17), lequel forme conjointement avec les espaces libres (29) une chambre commune (32), à laquelle est associé au moins un corps de tourbillonnement (33) pour produire un tourbillonnement et/ou un écoulement du milieu d'échaudage (18) dans le réservoir d'échaudage (20), **caractérisé en ce que** l'espace de réception (31) s'étend en dessous de l'ensemble du canal d'échaudage (20), donc entre les parois de fond (28) des sections de canal d'échaudage linéaires et courbes d'une part et la paroi de fond (16) du réservoir d'échaudage (17) d'autre part, au moins un appareil de pompage (34) étant agencé dans l'espace de réception (31) s'étendant ainsi jusque dans la zone des sections de canal d'échaudage courbes, en tant que corps de tourbillonnement (33) pour former une chambre de pression (35) agissant le long de l'ensemble du canal d'échaudage (20).

2. Dispositif (10) selon la revendication 1, **caractérisé en ce que** le long de chaque trajet de transport (21 à 23) sont agencés au moins deux appareils de pompage (34) et chaque appareil de pompage (34) comprend un corps de pompe (38) avec un arbre d'entraînement (39) dirigé verticalement avec une roue à pales (40) pouvant être entraînée en rotation ainsi qu'un entraînement (41), au moins la roue à pales (40) étant agencée dans la zone de la paroi de fond (28) de la ou de chaque section de canal d'échaudage à l'intérieur du réservoir d'échaudage (17) et l'entraînement (41) étant agencé à l'extérieur du réservoir d'échaudage (17).

3. Dispositif (10) selon la revendication 1 ou 2, **caractérisé en ce qu'**au moins un appareil de pompage (34) séparé est associé à chaque section de canal d'échaudage linéaire.

4. Dispositif (10) selon une ou plusieurs des revendications 1 à 3, **caractérisé en ce qu'**au moins un appareil de pompage (34) commun est associé à au moins deux sections de canal d'échaudage voisines et parallèles entre elles.

5. Dispositif (10) selon une ou plusieurs des revendications 1 à 4, **caractérisé en ce qu'**au moins une rangée, de préférence deux rangées, d'appareils de pompage (34) est/sont configurée(s) et agencée(s) transversalement à l'extension longitudinale des sections de canal d'échaudage linéaires, la distance maximale entre les appareils de pompage (34) et les sections de canal d'échaudage courbes étant d'environ 3,5 m.

6. Dispositif (10) selon la revendication 5, **caractérisé en ce que** deux ou plus de deux appareils de pompage (34) d'une rangée forment un module de pompage (42) qui, conjointement avec des modules centraux (43) avec des parties de section de canal d'échaudage linéaires et des modules d'extrémité (44) avec des parties de section de canal d'échaudage linéaires et des sections de canal d'échaudage courbes, forme un dispositif modulaire (10) avec le canal d'échaudage continu (20).

7. Dispositif (10) selon une ou plusieurs des revendications 1 à 6, **caractérisé en ce que** des parois de séparation (26, 27) voisines délimitant une section de canal d'échaudage présentent des hauteurs différentes, de telle sorte qu'une paroi de séparation (27) tournée vers le côté dos de la volaille (11) est configurée plus basse qu'une paroi de séparation (26) opposée tournée vers le côté poitrine de la volaille (11).

8. Dispositif (10) selon la revendication 7, **caractérisé en ce que** la paroi de séparation (27) tournée vers le côté dos est plus basse d'au moins un centimètre, éventuellement même d'au moins deux centimètres et éventuellement encore d'au moins trois centimètres, que la paroi de séparation (26) tournée vers le côté poitrine.

9. Dispositif (10) selon une ou plusieurs des revendications 1 à 8, **caractérisé en ce que** la hauteur d'au moins une des parois de séparation (26, 27) de chaque section de canal d'échaudage est configurée pour être réglable de manière variable.

10. Dispositif (10) selon une ou plusieurs des revendications 1 à 9, **caractérisé en ce qu'**au moins l'une des parois de séparation (26, 27) d'une section de canal d'échaudage présente, au moins sur un côté intérieur tourné vers le trajet de transport (21 à 23), une forme adaptée au moins par sections au contour de la volaille (11).

11. Dispositif (10) selon une ou plusieurs des revendications 1 à 10, **caractérisé en ce que**, pour former un contre-courant dirigé à l'encontre de la direction de transport de la volaille (11), au moins un appareil de buse est agencé dans la zone de sortie (A) de la volaille du réservoir d'échaudage (17) pour introduire de l'eau propre, de préférence chauffée, tandis que dans la zone d'entrée (E) de la volaille (11) dans le réservoir d'échaudage (17) est configurée au moins une sortie pour évacuer l'eau sale.

12. Dispositif (10) selon une ou plusieurs des revendications 3 et 5 à 11, **caractérisé en ce qu'**une roue à pales (40) de chaque appareil de pompage (34) est agencée dans une zone d'une percée (49) de la paroi de fond (28) de la section de canal d'échaudage pour établir une liaison d'écoulement entre une section de canal d'échaudage et l'espace de réception (31), la roue à pales (40) étant au moins partiellement protégée par rapport à la section de canal d'échaudage par un couvercle (50) agencé et configuré à distance de la roue à pales (40).

13. Dispositif (10) selon une ou plusieurs des revendications 4 à 11, **caractérisé en ce qu'**une roue à pales (40) de chaque appareil de pompage (34) est agencée dans une zone d'une percée (52) respectivement d'une paroi de fond (28) et/ou d'une paroi de séparation (26, 27) d'au moins deux sections de canal d'échaudage pour établir une liaison d'écoulement entre au moins deux sections de canal d'échaudage voisines et l'espace de réception (31), la roue à pales (40) étant entièrement protégée par rapport à l'espace libre (29) formé entre des parois de séparation voisines (26, 27) de sections de canal d'échaudage voisines.

14. Dispositif (10) selon une ou plusieurs des revendications 1 à 13, **caractérisé en ce que** le long du canal d'échaudage (20) est agencé au moins un corps de tourbillonnement en tant que moyen de production de tourbillonnement et/ou d'écoulement du milieu d'échaudage (18), qui peut être entraîné en rotation au moyen d'un arbre d'entraînement dirigé horizontalement et dirigé transversalement à la direction de transport T de la volaille (11).

15. Dispositif (10) selon une ou plusieurs des revendications 1 à 14, **caractérisé en ce que** dans la zone des parois latérales (12, 13) du réservoir d'échaudage (17) est configurée au moins une ouverture (54) pouvant être fermée pour accéder à la chambre de pression (35), de préférence dans la zone d'entrée (E).

16. Dispositif (10) selon une ou plusieurs des revendications 1 à 15, **caractérisé en ce qu'**au moins une soupape d'évacuation (48) est associée au réservoir d'échaudage (17).

17. Dispositif (10) selon une ou plusieurs des revendications 1 à 16, **caractérisé en ce que** le dispositif (10) est associé à un appareil de commande au moins pour commander et/ou réguler les moyens (30) de chauffage du milieu d'échaudage (18).

18. Procédé d'échaudage de volailles abattues (11), comprenant les étapes suivantes :
- le transport de la volaille (11) suspendue par les pattes à travers un réservoir d'échaudage (17) au moins partiellement rempli de milieu d'échaudage liquide (18) au moyen d'un moyen de transport (19) dans la direction de transport T depuis une zone d'entrée (E) vers une zone de sortie (A) le long d'un canal d'échaudage (20), le canal d'échaudage (20) comprenant des sections de canal d'échaudage linéaires et courbes,
- le chauffage et/ou l'amenée du milieu d'échaudage (18) par des moyens (30) pour chauffer et/ou amener le milieu d'échaudage (18), et
- le tourbillonnement du milieu d'échaudage (18) à l'intérieur du réservoir d'échaudage (17) au moyen d'au moins un corps de tourbillonnement (33), moyennant quoi le milieu d'échaudage (18) est ramené par sections par le haut dans le canal d'échaudage (20) à partir d'un espace de réception (31) en dessous du canal d'échaudage (20),
**caractérisé en ce que** le milieu d'échaudage (18) est aspiré par le bas hors du canal d'échaudage (20) au moyen d'au moins un appareil de pompage (34) et est pompé sur toute la longueur du canal d'échaudage (20), c'est-à-dire dans la zone des sections de canal d'échaudage linéaires et courbes, des deux côtés de celui-ci, en retour par le haut dans le canal d'échaudage (20).

19. Procédé selon la revendication 18, **caractérisé en ce que** la volaille (11) est transportée latéralement à travers le canal d'échaudage (20) délimité par des parois de séparation (26, 27) opposées l'une à l'autre, de telle sorte que la volaille (11) est dirigée lors du transport avec un côté dos vers une paroi de séparation (27) et avec un côté poitrine vers la paroi de séparation (26) opposée, un volume de milieu d'échaudage plus important étant renvoyé par le haut dans le canal d'échaudage (20) par l'intermédiaire de la paroi de séparation (27) qui est tournée vers le côté dos que par l'intermédiaire de la paroi de séparation (26) qui est tournée vers le côté poitrine.

20. Procédé selon la revendication 18 ou 19, **caractérisé en ce que** de l'eau fraîche est amenée à partir de la zone de sortie (A) en direction de la zone d'entrée (E) pour produire un contre-courant à l'encontre de la direction de transport T de la volaille (11), de telle sorte que la volaille (11) est transportée à l'encontre du courant d'eau fraîche et le milieu d'échaudage sale (18) s'accumule dans la zone d'entrée (E) et la volaille (11) est transportée en direction de la zone de sortie (A) par un milieu d'échaudage de plus en plus propre (18).

21. Procédé selon une ou plusieurs des revendications 18 à 20, **caractérisé en ce que** la volaille (11) est au choix totalement, partiellement ou pas du tout immergée dans le milieu d'échaudage (18) lors du transport à travers le canal d'échaudage (20).

22. Procédé selon une ou plusieurs des revendications 18 à 21, **caractérisé en ce que** le milieu d'échaudage (18) est nettoyé au moyen d'un appareil de filtration.

23. Procédé selon une ou plusieurs des revendications 18 à 22, **caractérisé en ce que** le milieu d'échaudage (18) circule lui-même à l'intérieur du réservoir d'échaudage (17), à savoir qu'il est aspiré hors du canal d'échaudage (20) et renvoyé dans le canal d'échaudage (20) sous forme de trop-plein des deux côtés, et de l'eau fraîche préchauffée est pompée dans le canal d'échaudage (20) dans la zone de sortie (A) à l'encontre de la direction de transport T, avec une pression.

24. Procédé selon une ou plusieurs des revendications 18 à 23, **caractérisé en ce que** le milieu d'échaudage (18) est aspiré hors du canal d'échaudage (20) dans la zone de parois de fond (28) avec plusieurs appareils de pompage (34) et est pompé vers le haut des deux côtés du canal d'échaudage (20), de telle sorte qu'il s'écoule en retour des deux côtés par le haut dans le canal d'échaudage (20), au moins un appareil de pompage (34) alimentant à chaque fois au choix une section de canal d'échaudage ou au moins deux sections de canal d'échaudage.

25. Procédé selon une ou plusieurs des revendications 18 à 24, **caractérisé en ce qu'**il est mis en oeuvre avec un dispositif (10) selon une ou plusieurs des revendications 1 à 17.
